# EUROPÄISCHE PATENTSCHRIFT

(11) **EP 1 328 589 B1**
(45) Veröffentlichungstag und Bekanntmachung des Hinweises auf die Patenterteilung: **29.11.2006**
(21) Anmeldenummer: 01976274.9
(22) Anmeldetag: 11.10.2001
(51) Int. Cl.: C09D 5/00, C09D 5/08

(54) **VERFAHREN ZUR BESCHICHTUNG VON METALLISCHEN OBERFLÄCHEN MIT EINER WÄSSERIGEN, POLYMERE ENTHALTENDEN ZUSAMMENSETZUNG, DIE WÄSSERIGE ZUSAMMENSETZUNG UND VERWENDUNG DER BESCHICHTETEN SUBSTRATE**
METHOD FOR COATING METAL SURFACES WITH AN AQUEOUS, POLYMER-CONTAINING COMPOSITION, SAID AQUEOUS COMPOSITION AND THE USE OF THE COATED SUBSTRATES
PROCEDE DE REVETEMENT DE SURFACES METALLIQUES AVEC UNE COMPOSITION AQUEUSE CONTENANT DES POLYMERES, COMPOSITION AQUEUSE CORRESPONDANTE ET UTILISATION DES SUBSTRATS REVETUS

(30) Priorität: 11.10.2000 DE 10050537; 07.06.2001 DE 10127721
(43) Veröffentlichungstag der Anmeldung: 23.07.2003
(73) Patentinhaber: Chemetall GmbH, 60487 Frankfurt (DE)
(72) Erfinder: JUNG, Christian, 96173 Oberhaid (DE); SHIMAKURA, Toshiaki, 272-0815 Ichikawa-shi, Chiba-Ken (JP); MAURUS, Norbert, 63225 Langen (DE); DOMES, Heribert, 35789 Weilmünster (DE)
(74) Vertreter: Uppena, Franz
(86) Internationale Anmeldenummer: PCT/EP2001/011507
(87) Internationale Veröffentlichungsnummer: WO 2002/031063

(56) Entgegenhaltungen:
- EP-A- 0 344 717
- EP-A- 0 551 568
- US-A- 4 548 868
- US-A- 5 905 105
- DATABASE WPI Section Ch, Week 200042 Derwent Publications Ltd., London, GB; Class A82, AN 2000-482650 XP002187245 & WO 00 39224 A (NIPPON PARKERIZING CO LTD), 6. Juli 2000 (2000-07-06)

## Beschreibung

Die Erfindung betrifft ein Verfahren zur Beschichtung von metallischen Oberflächen mit einer Polymer sowie feine anorganische Partikel enthaltenden wässerigen Zusammensetzung. Ferner betrifft die Erfindung eine entsprechende wässerige Zusammensetzung sowie die Verwendung der nach dem erfindungsgemäßen Verfahren beschichteten Substrate.

Die bislang am häufigsten eingesetzten Verfahren zur Oberfilächenbehandlung bzw. Vorbehandlung vor der Lackierung von Metallen, insbesondere von Metallband, basieren auf dem Einsatz von Chrom(VI)-Verbindungen zusammen mit diversen Zusatzstoffen. Aufgrund der toxikologischen und ökologischen Risiken, die derartige Verfahren mit sich bringen und darüber hinaus aufgrund der absehbaren gesetzlichen Einschränkungen bezüglich der Anwendung von Chromat-haltigen Verfahren wird schon seit längerer Zeit nach Alternativen zu diesen Verfahren auf allen Gebieten der Metalloberflächenbehandlung gesucht.

Es sind Harzgemische bekannt, bei denen Harze mit anorganischen Säuren abgemischt werden, um auf diese Weise auch einen Beizangriff und somit einen besseren Kontakt der Harzschicht direkt mit der metallischen Oberfläche zu erzielen. Diese Zusammensetzungen haben den Nachteil, daß aufgrund des Beizangriffes die Kontamination während des Kontaktierens der Behandlungsflüssigkeit (Dispersion) zum Substrat eintritt. Dies führt zur Anreicherung von Metallen in der Behandlungsflüssigkeit und dadurch bedingt zur permanenten Veränderung der chemischen Zusammensetzung der Behandlungsflüssigkeit, wodurch der Korrosionsschutz signifikant beeinträchtigt wird. Diese Metalle werden durch den Beizangriff aus der metallischen Oberfläche der zu behandelnden Substrate herausgelöst.

Ein weiterer Nachteil besteht darin, daß sich speziell bei Aluminium bzw. bei Aluminium-enthaltenden Legierungen die Oberflächen dunkel; u.U. dunkelgrau bis anthrazitfarben verfärben. Die dunkel verfärbten Metalloberflächen sind für dekorative Anwendungen nicht einsetzbar, da die Verfärbung selbst aus ästhetischen Gründen unerwünscht ist. Die Dunkelfärbung ist je nach der Dicke der Schichtauflage mit unterschiedlicher Intensität sichtbar.

DE-A-198 14 605 beschreibt ein Versiegelungsmittel für metallische Oberflächen, das neben mindestens einem Lösemittel mindestens ein Silanderivat und kolloidale Kieselsäure oder/und kolloidales Silicat enthält. Bei den Beispielen liegt der Gehalt an Silan(en) bei 20 Gew.-% (in etwa 200 g/L) und an Kieselsol bzw. Silicat im Bereich von 10 bis 40 Gew.-%. Ein angedeuteter Zusatz an Wachs zur Verminderung der Reibungszahl oder an organischem Bindemittel als Netzmittel wie z.B. Polypropylen, Polyethylen, Polyethylenoxid oder modifiziertem Polysiloxan oder aus anderen, nicht angeführten Gründen mit nicht weiter genannten Bindemitteln wurde bei den Beispielen nicht eingesetzt. Die Beispiele führen über die Silane hinaus keine polymeren Substanzen auf.

EP-B1-0 608 107 lehrt eine wässerige Beschichtungszusammensetzung auf der Basis von hochdispersem Siliciumdioxid oder Aluminiumsilicat, einer Borsäureverbindung, einer Harzkomponente und Wasser, um eine Korrosionsschutzschicht z.B. auf verzinktem Stahl auszubilden. Das Gewichtsverhältnis Festkörper zu Lösemittel dieser Zusammensetzung soll nach Anspruch 10 im Bereich von (0,25 bis 1) : 1 liegen. Durch den Zusatz einer Borsäureverbindung wie Metaborsäure als "colloidizing agent" für die kolloidalen Komponenten wurde eine Langzeitstabilisierung der Dispersion erzielt. Außerdem wurde vorteilhaft Melamincyanurat zugesetzt.

US 5,089,064 bezieht sich auf ein Verfahren zur Verbesserung der Korrosionsbeständigkeit durch Ausbildung einer Beschichtung auf Basis von H₂ZrF₆, einem bestimmten Hydroxystyren-Polymer, ggf. dispergiertem SiO₂, einem Lösemittel und einem Tensid auf einer Aluminiumoberfläche.

JP-A-07-252433 beschreibt ein Verfahren zur Beschichtung von metallischen Oberflächen wie Stahloberflächen mit einer wässerigen Dispersion, die 30 bis 90 Gew.-% einer α,β-ungesättigten Carboxylsäure, 3 bis 20 Gew.-% ausgewählt aus Acrylester, Methacrylester und Vinylgruppen enthaltenden Monomeren, 7 bis 67 Gew.-% von polymerisierbaren Monomeren in wässeriger, alkalischer Lösung und wässeriges Sol mit SiO₂-Partikeln von mindestens 100 m²/g spezifischer Oberfläche enthält und durch Copolymerisation reagiert wird. Hierbei wird anscheinend mit einem Bisphenol-Epoxidharz gearbeitet.

JP-A-02-235973 offenbart ein Verfahren zur Beschichtung von Gegenständen insbesondere der Nahrungsmittelindustrie mit einer wässerigen Dispersion auf Basis von selbstemulgierbarem Carboxyl-Gruppen enthaltendem Epoxidharz und Vinylmonomeren, die in der Gegenwart eines Polymerisationsinitiators copolymerisiert werden. Diese Dispersion enthält anorganische Partikel mit einem mittleren Partikeldurchmesser von bis zu 2 µm.

JP-A-05-255587 betrifft ein Verfahren zur Beschichtung von Metallplatten mit einer Dispersion aus Polyurethanharz, feinen oder/und gröberen SiO₂-Partikeln sowie aus Polyolefinwachs mit einem Schmelzpunkt von mindestens 90 °C oder/und PTFE. Das Polyurethanharz weist eine bestimmte Elastizität auf und soll der Beschichtung gute Tiefzieheigenschaften verleihen.

EP-A2-0 344 717 beschreibt Stahlbleche, die zuerst metallisch auf der Basis von Al oder/und Zn, danach mit Chromat und anschließend mit einer wässerigen Zusammensetzung auf der Basis von Harzen wie Epoxidharz oder Polyvinylbutyral, SiO₂ und einem Polyolefinwachs beschichtet wurden.

WO 00/39224 geht von organischen Substanzen auf Basis von Epoxid, Urethan und Isocyanat aus. Hierzu wird einerseits ein Skelett auf Basis von Bisphenol und andererseits auf Basis von Polyesterpolyol eingesetzt. Organische Amine und Polyesterpolyole dienen dabei nur als Reaktionspartner, um die Eigenschaften der polymeren Beschichtung zu verbessern. Diese Publikation lehrt keine wässerigen Zusammensetzungen mit Mischpolymerisaten. Die Reaktionen erfordern eine hohe Reaktionstemperatur.

EP-A2-0 551 568 lehrt wässerige Beschichtungszusammensetzungen, die eine wässerige anionische Polyacrylat- oder Polyurethan-Dispersion, ein Phosphor enthaltendes Pigment und Additive ausgewählt aus Pigmenten, Lösemitteln, Rostschutzmitteln, Dispergiermitteln und Tensiden enthalten. Darüber hinaus enthält diese Zusammensetzung ethylenisch ungesättigte Carboxylsäure, deren Anhydride bzw. deren Monomere. Diese Publikation lehrt keine wässerigen Zusammensetzungen mit Mischpolymerisaten, sondern nur Gemische mit Monomeren enthaltenden Dispersionen, deren Monomere bei der Lösungspolymerisation über eine mehrstündige Reaktionszeit zu Polymeren umgesetzt werden.

Aufgabe der Erfindung ist es, die Nachteile des Standes der Technik zu überwinden und insbesondere ein Verfahren zur Beschichtung von metallischen Oberflächen vorzuschlagen, das auch für hohe Beschichtungsgeschwindigkeiten, wie sie für Bänder genutzt werden, geeignet ist, das weitgehend oder gänzlich frei von Chrom(VI)-Verbindungen anwendbar ist, das möglichst auch frei von anorganischen und organischen Säuren und das großtechnisch einsetzbar ist.

Die Aufgabe wird gelöst durch ein Verfahren zur Beschichtung einer metallischen Oberfläche, insbesondere von Aluminium, Eisen, Kupfer, Magnesium, Nickel, Titan, Zinn, Zink oder Aluminium, Eisen, Kupfer, Magnesium, Nickel, Titan, Zinn oder/und Zink enthaltenden Legierungen, mit einer wässerigen Zusammensetzung, die weitgehend oder gänzlich von Chrom(VI)-Verbindungen frei sein kann, zur Vorbehandlung vor einer weiteren Beschichtung oder zur Behandlung, bei der der zu beschichtende Körper ggf. - insbesondere ein Band oder Bandabschnitt - nach der Beschichtung umgeformt wird, das dadurch gekennzeichnet ist, daß die Zusammensetzung neben Wasser
a) mindestens einen organischen Filmbildner, der mindestens ein wasserlösliches oder wasserdispergiertes Polymer mit einer Säurezahl im Bereich von 5 bis 200 enthält, auf der Basis von
   Acryl-Polyester-Polyurethan-Mischpolymerisat,
   Acryl-Polyester-Polyurethan-Styrol-Mischpolymerisat,
   Ethylen-Acryl-Polyester-Polyurethan-Mischpolymerisat,
   Ethylen-Acryl-Pofyester-Polyurethan-Styrol-Mischpolymerisat,
   Ethylen-Acryl-Mischpolymerisat,
   Ethylen-Acryl-Styrol-Mischpolymerisat,
   Polyesterharzen mit freien Carboxylgruppen kombiniert mit Melamin-Formaldehydharzen,
   einem Mischpolymerisat auf der Basis von Acrylat und Styrol,
   einem Mischpolymerisat auf der Basis von Styrolbutadien oder/und
   einem Mischpolymerisat von Acrylat und Epoxid
   bzw. auf der Basis von einem Acryl-modifizierten Carboxylgruppen-haltigen Polyester zusammen mit Melamin-Formaldehyd und Ethylen-Acryl-Mischpolymerisat,
b) mindestens eine anorganische Verbindung in Partikelform mit einem mittleren Partikeldurchmesser gemessen an einem Rasterelektronenmikroskop im Bereich von 0,005 bis zu 0,3 µm Durchmesser,
c) mindestens ein Gleitmittel,
d) mindestens einen langkettigen Alkohol und
e) mindestens einen organischen Korrosionsinhibitor, mindestens ein Silan oder/und Siloxan berechnet als Silan oder/und mindestens ein Vernetzungsmittel insbesondere auf Basis einer basischen Verbindung sowie
f) ggf. mindestens ein organisches Lösemittel enthält,
wobei die saubere metallische Oberfläche mit der wässerigen Zusammensetzung in Kontakt gebracht und ein Partikel enthaltender Film auf der metallischen Oberfläche ausgebildet wird, der anschließend getrocknet wird und ggf. zusätzlich ausgehärtet wird,
wobei der getrocknete und ggf. auch ausgehärtete Film eine Schichtdicke im Bereich von 0,01 bis 10 µm aufweist - bestimmt durch Ablösen einer definierten Fläche des ausgehärteten Films und Auswiegen.

Der getrocknete und ggf. auch ausgehärtete Film weist vorzugsweise eine Pendelhärte von 30 bis 190 s, vorzugsweise von 50 bis 180 s, auf, gemessen mit einem Pendelhärteprüfer nach König nach DIN 53157. Die Pendelhärte nach König liegt vorzugsweise im Bereich von 60 bis 150 s, besonders bevorzugt im Bereich von 80 bis 120 s. Bei UV-vemetzbaren Beschichtungen treten oft Werte im Bereich von 100 bis 150 s der Pendelhärte auf, während bei den nicht-UV-vemetzbaren oder z.B. auf nicht oder kaum chemisch vernetzenden Polymerdispersionen basierenden Beschichtungen können bevorzugt Werte der Pendelhärte im Bereich von 40 bis 80 s auftreten. Die erfindungsgemäß hergestellten Schichten sind nur an Prüfkörpern mit chemisch gleichartigen, aber ausreichend dicken Schichten zu prüfen, jedoch nicht an dünnen Beschichtungen im Bereich bis zu 10 µm Dicke.

Der getrocknete und ggf. auch ausgehärtete Film weist vorzugsweise eine derartige Flexibilität auf, daß beim Biegen über einen konischen Dorn bei einem Dombiegetest weitestgehend nach DIN ISO 6860 für einen Dorn von 3.2 mm bis 38 mm Durchmesser - jedoch ohne die Testfläche anzureißen - keine Risse länger als 2 mm entstehen, die bei der anschließenden Benetzung mit Kupfersulfat durch Farbumschlag infolge Kupferabscheidung auf der aufgerissenen metallischen Oberfläche erkennbar werden. Der Nachweis der Flexibilität durch Anwendung des Dornbiegetests und anschließendem Tauchen der auf diese Weise umgeformten Bereiche in eine Kupfersulfatlösung zum Erkennen von Fehlstellen gewährt ein reproduzierbares Testergebnis und hat den Vorteil, daß hierzu keine aufwendigen, z.B. 240 h andauernden Korrosionsprüfungen erforderlich sind, die teilweise je nach chemischer Zusammensetzung und Rauheit der metallischen Oberfläche zu unterschiedlichen Ergebnissen führen kann, die daher nur begrenzt miteinander verglichen werden können. Für diesen Test ist es bei unedleren metallischen Oberflächen wie bei Aluminiumlegierungen erforderlich, vor der Beschichtung die metallische Oberfläche erst einmal beizend zu reinigen, um die Oxidschicht weitestgehend zu entfernen.

Vorzugsweise ist die wässerige Zusammensetzung frei von anorganischen Säuren oder/und organischen Carbonsäuren, insbesondere frei von anorganischen Säuren.

Der organische Filmbildner ist in der wässerigen Zusammensetzung (Badlösung) vorzugsweise in einem Gehalt von 0,1 bis 1000 g/L enthalten, besonders bevorzugt in einem Bereich von 2 bis 600 g/L, ganz besonders bevorzugt von 50 bis 550 g/L, insbesondere von 150 bis 450 g/L. Vorzugsweise werden auf 100 Gewichtsteile Wasser 2 bis 100 Teile des organischen Filmbildners zugegeben, besonders bevorzugt 10 bis 60 Teile, ganz besonders bevorzugt 15 bis 45 Teile. Die höchsten Gehalte an organischem Filmbildner können insbesondere bei UV-härtenden Systemen ohne oder nur mit geringen flüchtigen Anteilen wie organischen Lösemitteln oder/und Restmonomeren auftreten. Für das erfindungsgemäße Verfahren besonders bevorzugt sind vorwiegend oder allein beim Trocknen verfilmte bzw. thermischphysikalisch gehärtete Beschichtungen.

Die mindestens eine anorganische Verbindung in Partikelform ist in der wässerigen Zusammensetzung (Badlösung) vorzugsweise in einem Gehalt von 0,1 bis 500 g/L enthalten, besonders bevorzugt in einem Bereich von 10 bis 200 g/L, ganz besonders bevorzugt von 30 bis 100 g/L. Vorzugsweise werden auf 100 Gewichtsteile Wasser 0,1 bis 50 Teile der mindestens einen anorganischen Verbindung in Partikelform zugegeben, besonders bevorzugt 0,5 bis 20 Teile, ganz besonders bevorzugt 0,8 bis 10 Teile. Unter den anorganischen Verbindungen in Partikelform sind insbesondere solche bevorzugt, die die Transparenz der erfindungsgemäßen Beschichtung erhalten, also farblos bzw. weiß sind, wie z.B. Aluminiumoxid, Bariumsulfat, Silicat, Siliciumdioxid, kolloidalem Siliciumdioxid, Zinkoxid oder/und Zirkoniumoxid, um den visuellen Charakter der metallischen Oberfläche möglichst unverfälscht sichtbar zu erhalten.

Das Verhältnis der Gehalte an organischem Filmbildner zu Gehalten an anorganischen Verbindungen in Partikelform in der wässerigen Zusammensetzung (Badlösung) kann in weiten Bereichen schwanken; insbesondere kann es bei ≤ 25 : 1 liegen. Vorzugsweise liegt dieses Verhältnis in einem Bereich von 0,05 : 1 bis 15 : 1, besonders bevorzugt in einem Bereich von 1 : 1 bis 8 : 1.

Der Gehalt an mindestens einem Silan oder/und Siloxan berechnet als Silan beträgt in der wässerigen Zusammensetzung (Badlösung) vorzugsweise 0,1 bis 50 g/L, besonders bevorzugt 0,2 bis 35 g/L, ganz besonders bevorzugt 0,5 bis 20 g/L, insbesondere 1 bis 10 g/L.

Für ein Konzentrat zum Ansetzen der Badlösung in erster Linie durch Verdünnen mit Wasser bzw. für eine Ergänzungslösung zum Einstellen der Badlösung beim längeren Betrieb eines Bades werden vorzugsweise wässerige Zusammensetzungen verwendet, die die meisten oder fast alle Bestandteile der Badlösung enthält, jedoch nicht die mindestens eine anorganische Verbindung in Partikelform, die bevorzugt separat gehalten und separat zugeben wird. Auch Reaktions- und Tracknungsbeschleuniger wie z.B. das Morpholinsalz der Paratoluolsulfosäure können vorteilhaft separat zugegeben werden, insbesondere zur Aushärtung bei Polyester-Melaminharz-Systemen. Das Konzentrat bzw. die Ergänzungslösung weisen vorzugsweise eine Konzentration auf, die fünfmal bis zehnmal bezüglich der einzelnen Bestandteile so stark angereichert ist wie die Badlösung. In manchen Fällen kann jedoch auch mit dem "Konzentrat" direkt als Badlösung gearbeitet werden, ggf. nach einer geringen Verdünnung um z.B. 5 bis 30 %.

Die wässerige Zusammensetzung, die vorzugsweise weitgehend frei von Chrom(VI)-Verbindungen ist, weist auf Chrom-freien metallischen Oberflächen nur einen Chrom-Gehalt von bis zu 0,05 Gew.-%, auf Chrom-haltigen metallischen Oberflächen einen Chrom-Gehalt von bis zu 0,2 Gew.-% auf. Vorzugsweise ist der Lösung oder Dispersion kein Chrom bewußt zugegeben. Im Bad auftretende Chromgehalte können dann durch Beizangriff aus der metallischen Oberfläche herausgelöst sein, aus Verunreinigungsgehalten in Spuren stammen bzw. eingeschleppt sein aus vorgeschalteten Bädern bzw. aus Behältern und Rohrleitungen kommen. Vorzugsweise werden auch Gehalte an Cadmium, Nickel, Kobalt oder/und Kupfer äußerst gering gehalten und nicht zugegeben. Üblicherweise ist jedoch für die erfindungsgemäßen Lösungen bzw. Dispersionen der Beizangriff derart gering, daß kein Stahlveredler wie z.B. Chrom oder Nickel aus einer Stahloberfläche herausgelöst werden kann.

Der Begriff "saubere metallische Oberfläche" bedeutet hierbei eine ungereinigte metallische, z.B. frisch verzinkte Oberfläche, bei der keine Reinigung notwendig ist, bzw. eine frisch gereinigte Oberfläche.

Bei dem erfindungsgemäßen Verfahren kann der organische Filmbildner in der Form einer Lösung, Dispersion, Emulsion, Mikroemulsion oder/und Suspension vorliegen Der Begriff Dispersion umfaßt dabei auch die Unterbegriffe Emulsion, Mikroemulsion und Suspension. Der organische Filmbildner kann mindestens ein Kunstharz sein bzw. enthalten, insbesondere ein Kunstharz auf Basis Acrylat, Butadien, Ethylen, Polyester, Polyurethan, Siliconpolyester, Epoxid, Phenol, Styrol, Hamstoff-Formaldehyd, deren Mischungen oder/und deren Mischpolymerisaten. Hierbei kann es sich um ein kationisch, anionisch oder/und sterisch stabilisiertes Kunstharz bzw. Polymer oder/und deren Lösung handeln.

Vorzugsweise ist der organische Filmbildner ein Kunstharzgemisch oder/und ein Mischpolymerisat, das einen Gehalt an Kunstharz auf Basis Acrylat, Epoxid, Ethylen, Hamstoff-Formaldehyd, Phenol, Polyester, Polyurethan, Styrol oder/und Styrolbutadien enthält, aus dem während bzw. nach der Abgabe von Wasser und anderen flüchtigen Bestandteilen ein organischer Film ausbildet wird. Der organische Filmbildner kann Kunstharz oder/und Polymer auf der Basis von Epoxid, Phenol, Polyacrylat, Polyethylenimin, Polyurethan, Polyvinylalkohol, Polyvinylphenol, Polyvinylpyrrolidon, Polyasparaginsäure oder/und deren Derivate bzw. Copolymere, insbesondere Copolymere mit einer Phosphor enthaltenden Vinylverbindung, enthalten.

Ganz besonders bevorzugt ist ein Kunstharz auf Basis Acrylat oder auf Basis Ethylen-Acrylsäure mit einem Schmelzpunkt im Bereich von 60 bis 95 °C oder ein Kunstharz mit einem Schmelzpunkt im Bereich von 20 bis 160 °C, insbesondere im Bereich von 60 bis 120 °C.

Die Säurezahl des Kunstharzes/Kunstharzgemisches kann vorzugsweise im Bereich von 10 bis 140 liegen, besonders bevorzugt im Bereich von 15 bis 100, ganz besonders bevorzugt im Bereich von 20 bis 80. In einem hohen Bereich der Säurezahl ist es üblicherweise nicht notwendig, einen Filmbildrier kationisch, anionisch oder/und sterisch zu stabilisieren. Bei einer geringen Säurezahl ist jedoch eine solche Stabilisierung meistens notwendig. Dann ist es vorteilhaft, bereits stabilisierte Kunstharze bzw. deren Gemische einzusetzen.

Das Molekulargewicht des Kunstharzes bzw. des Polymers kann im Bereich von mindestens 1.000 u, vorzugsweise von 5.000 bis 250.000 u, besonders bevorzugt im Bereich von 20.000 bis 200.000 u liegen.

Bei dem erfindungsgemäßen Verfahren kann der pH-Wert der wässerigen Lösung des organischen Filmbildners ohne Zugabe weiterer Verbindungen vorzugsweise im Bereich von 0,5 bis 12 liegen, besonders bevorzugt im Bereich von 1 bis 6 bzw. 6 bis 10,5, ganz besonders bevorzugt im Bereich von 1,5 bis 4 bzw. 7 bis 9, je nachdem, ob im sauren oder eher basischen Bereich gearbeitet wird. Hierbei ist zu berücksichtigen, daß die Kunstharze oft bereits beim Kunstharzhersteller neutralisiert wurden. Vorzugsweise liegt der pH-Wert nur des organischen Filmbildners in einer wässerigen Zubereitung ohne Zugabe weiterer Verbindungen im Bereich von 1 bis 12. Falls jedoch der pH-Wert aufgrund der Lagerung der Kunstharze bzw. der Gemische abgefallen sein sollte, kann es hilfreich sein, den pH-Wert insbesondere der ansonsten einsatzbereiten Lösung/Dispersion z.B. durch Zugabe von Natronlage wieder in einen alkalischeren Bereich zu bringen.

Der organische Filmbildner kann auch so zusammengesetzt sein, daß er (nur) wasserlösliches Kunstharz oder/und Polymer enthält, insbesondere solches, das in Lösungen mit pH-Werten ≤ 5 stabil ist.

Der organische Filmbildner enthält vorzugsweise (nur) Kunstharz oder/und Polymer, das Carboxyl-Gruppen aufweist. Die Carboxyl-Gruppen lassen sich u.a. durch Ammoniak, Amine - insbesondere Alkanolamine - oder/und Alkalimetallverbindungen neutralisieren und zu einer wässerigen Lösung mit einem gut wasserverdünnbaren Kunstharz umsetzen, das vorher unter Normalbedingungen nicht wasserlöslich ist. Zur Vernetzung der Carboxylgruppen-haltigen Kunstharze wird vorteilhafterweise Melamin-Formaldehyd zur chemischen Vernetzung zugegeben.

Bei dem erfindungsgemäßen Verfahren kann es bevorzugt sein, daß die wässerige Zusammensetzung mindestens ein teilhydrolysiertes oder gänzlich hydrolysiertes Silan bzw. mindestens ein Siloxan enthält. Das bietet dann den Vorteil, daß Haftbrücken zwischen dem Substrat und dem getrockneten Schutzfilm sowie zu möglicherweise nachträglich aufgetragenen Lackschichten oder/und Kunststoffbeschichtungen entstehen, wodurch auch eine verbesserte Lackhaftung erzielt wird. Ein weiterer Vorteil ist, daß geeignete Silane/Siloxane haftbrückenähnliche Vernetzungen innerhalb des getrockneten Schutzfilmes erzeügen, die die Festigkeit oder/und die Flexibilität des Beschichtungsverbundes sowie die Haftung zum Substrat wesentlich verbessern, wodurch bei vielen Lacksystemen eine verbesserte Haftung erzielt wird. Bei dem erfindungsgemäßen Verfahren kann es bevorzugt sein, daß die wässerige Zusammensetzung mindestens ein teilhydrolysiertes oder gänzlich hydrolysiertes Silan enthält. Das bietet dann den Vorteil, daß bei vielen Lacksystemen eine verbesserte Haftung erzielt wird. Das Silan kann ein Acyloxysilan, ein Alkylsilan, ein Alkyltrialkoxysilan, ein Aminosilan, ein Aminoalkylsilan, ein Aminopropyltrialkoxysilan, ein Bis-Silyl-Silan, ein Epoxysilan, ein Fluoroalkylsilan, ein Glycidoxysilan wie z.B. ein Glycidoxyalkyltrialkoxysilan, ein Isocyanato-Silan, ein Mercapto-Silan, ein (Meth)acrylato-Silan, ein Mono-Silyl-Silan, ein Multi-Silyl-Silan, ein Bis-(trialkoxysilyl-propyl)amin, ein Bis-(trialkoxysilyl)ethan, ein Schwefel enthaltendes Silan, ein Bis-(trialkoxysilyl)propyltetrasulphan, ein Ureidosilan wie z.B. ein (Ureidopropyltrialkoxy)silan oder/und ein Vinylsilan, insbesondere ein Vinyltrialkoxysilan oder/und ein Vinyltriacetoxysilan, sein. Es kann z.B. mindestens ein Silan im Gemisch mit einem Gehalt an mindestens einem Alkohol wie Äthanol, Methanol oder/und Propanol von bis zu 8 Gew.-% bezogen auf den Silan-Gehalt sein, vorzugsweise bis zu 5 Gew.-%, besonders bevorzugt bis zu 1 Gew.-%, ganz besonders bevorzugt bis zu 0,5 Gew.-%, ggf. mit einem Gehalt an anorganischen Partikeln, insbesondere in einem Gemisch aus mindestens einem Amino-Silan wie z.B. Bis-Amino-Silan mit mindestens einem Alkoxy-Silan wie z.B. Trialkoxy-Silyl-Propyl-Tetrasulfan oder ein Vinylsilan und ein Bis-Silyl-Aminosilan oder ein Bis-Silyl-Polyschwefelsilan und/oder ein Bis-Silyl-Aminosilan oder ein Aminosilan und ein Multi-Silyl-funktionelles Silan. Die wässerige Zusammensetzung kann dann auch alternativ oder ergänzend mindestens ein den o.g. Silanen entsprechendes Siloxan enthalten. Bevorzugt sind solche Silane/Siloxane, die eine Kettenlänge im Bereich von 2 bis 5 C-Atomen aufweisen und eine funktionelle Gruppe aufweisen, die zur Reaktion mit Polymeren geeignet ist. Ein Zusatz von mindestens einem Silan oder/und Siloxan kann dazu günstig sein, Haftbrücken auszubilden oder die Vernetzung zu fördern.

Bei dem erfindungsgemäßen Verfahren wird als anorganische Verbindung in Partikelform ein feinverteiltes Pulver, eine Dispersion oder eine Suspension zugesetzt, wie z.B. ein Carbonat, ein Oxid, ein Silicat oder ein Sulfat, insbesondere kolloidale oder/und amorphe Partikel. Als anorganische Verbindung in Partikelform sind Partikel auf Basis von mindestens einer Verbindung des Aluminiums, Bariums, Cers, Kalziums, Lanthans, Siliciums, Titans, Yttriums, Zinks oder/und Zirkoniums besonders bevorzugt, insbesondere Partikel auf Basis von Aluminiumoxid, Bariumsulfat, Cerdioxid, Siliciumdioxid, Silicat, Titanoxid, Yttriumoxid, Zinkoxid oder/und Zirkonoxid. Vorzugsweise werden als anorganische Verbindung in Partikelform Partikel mit einer mittleren Partikelgröße im Bereich von 6 nm bis 200 nm verwendet, besonders bevorzugt im Bereich von 7 bis 150 nm, ganz besonders bevorzugt im Bereich von 8 bis 90 nm, noch stärker bevorzugt im Bereich von 8 bis 60 nm, vor allem bevorzugt im Bereich von 10 bis 25 nm. Diese Partikel können auch in Form von Gel oder Sol vorliegen. Die Partikel können z.B. alkalisch stabilisiert sein, um eine bessere Dispergierung zu erzielen. Ein Zusatz von Bor zur Dispergierung der anorganischen Verbindung in Partikelform war nicht erforderlich und ist auch bei den Beispielen nicht verwendet worden. Es ist bevorzugt, daß größere Partikel eine eher plättchenförmige oder längliche Kornform aufweisen.

Bei dem erfindungsgemäßen Verfahren kann auch mindestens ein organisches Lösemittel zugesetzt werden. Als organisches Lösemittel für die organischen Polymere kann mindestens ein wassermischbarer oder/und wasserlöslicher Alkohol, ein Glykolether bzw. N-Methylpyrrolidon oder/und Wasser verwendet werden, im Falle der Verwendung eines Lösemittelgemisches insbesondere eine Mischung aus mindestens einem langkettigen Alkohol, wie z.B. Propylenglykol, ein Esteralkohol, ein Glykolether oder/und Butandiol mit Wasser. Vorzugsweise wird jedoch in vielen Fällen nur Wasser ohne jegliches organisches Lösemittel zugegeben. Der Gehalt an organischem Lösemittel beträgt vorzugsweise 0,1 bis 10 Gew.-%, insbesondere 0,25 bis 5 Gew.-%, ganz besonders bevorzugt 0,4 bis 3 Gew.%. Für die Bandherstellung ist es bevorzugt, eher nur Wasser und keine organischen Lösemittel einzusetzen, evtl. außer geringen Mengen an Alkohol.

Bei dem erfindungsgemäßen Verfahren kann als Gleitmittel, das auch als Umformmittel dienen kann, mindestens ein Wachs ausgewählt aus der Gruppe der Paraffine, Polyethylene und Polypropylene zugesetzt werden, insbesondere ein oxidiertes Wachs. Es ist besonders vorteilhaft, das Wachs als wässerige bzw. als kationisch, anionisch oder/und sterisch stabilisierte Dispersion einzusetzen, weil es dann in der wässerigen Zusammensetzung leicht homogen verteilt gehalten werden kann. Der Schmelzpunkt des als Gleitmittel eingesetzten Wachses liegt bevorzugt im Bereich von 40 bis 165 °C, besonders bevorzugt im Bereich von 50 bis 160 °C, insbesondere im Bereich von 120 bis 150 °C. Besonders vorteilhaft ist es, zusätzlich zu einem Gleitmittel mit einem Schmelzpunkt im Bereich von 120 bis 165°C ein Gleitmittel mit einem Schmelzpunkt im Bereich von 45 bis 95 °C oder mit einer Glasübergangstemperatur im Bereich von - 20 bis + 60 °C zuzusetzen, insbesondere in Mengen von 2 bis 30 Gew.-%, vorzugsweise von 5 bis 20 Gew.-%, des Gesamtfeststoffgehalts. Letzteres kann auch allein vorteilhaft eingesetzt werden. Vorzugsweise ist das mindestens eine Gleitmittel, das auch gleichzeitig ein Umformmittel sein kann, in einem Gehalt im Bereich von 0,1 bis 25 g/L und besonders bevorzugt in einem Gehalt im Bereich von 1 bis 15 g/L in der wässerigen Zusammensetzung enthalten. Ein Wachsgehalt ist jedoch nur vorteilhaft, wenn die erfindungsgemäße Beschichtung eine Behandlungsschicht ist, da der Wachsgehalt in einer Vorbehandlungsschicht bei der Lackierung nachteilig sein kann. Es kann ein Gleit- oder/und Umformmittel zugesetzt werden zur Verringerung des Reibungskoeffizienten der Beschichtung, insbesondere beim Umformen. Hierzu empfehlen sich u.a. Paraffin, Polyethylen bzw. oxidiertes Polyethylen.

Die Säuregruppen des Kunstharzes oder/und des Polymers können mit Ammonik, mit Aminen - insbesondere Alkanolaminen - wie z.B. Morpholin, Dimethylethanolamin, Diethylethanolamin oder Triethanolamin oder/und mit Alkalimetallverbindungen wie z.B. Natriumhydroxid neutralisiert sein.

Die erfindungsgemäße Lösung bzw. Dispersion zum Beschichten kann mindestens einen organischen Korrosionsinhibitor, insbesondere auf Basis von Amin(en), enthalten. Dieser Inhibitor kann mindestens ein Alkanolamin, vorzugsweise ein langkettiges Alkanolamin, mindestens ein leitfähiges Polymer z.B. auf Basis von Polyanilin oder/und mindestens ein Thiol sein. Er ist vorzugsweise bei Raumtemperatur nicht leichtflüchtig. Ferner kann es vorteilhaft sein, wenn er in Wasser gut löslich oder/und in Wasser gut dispergierbar ist, insbesondere mit mehr als 20 g/L. Besonders bevorzugt sind u.a. Alkylaminoethanole wie Dimethylaminoethanol bzw. Komplexe auf Basis von einem TPA-Amin wie N-Ethylmorpholin-Komplex mit 4-Methyl-γ-oxobenzinbutansäure. Dieser Korrosionsinhibitor kann zugesetzt werden, um eine stärkere Korrosionsinhibition zu bewirken oder noch weiter zu verstärken. Er ist besonders vorteilhaft, wenn unverzinkte Stahloberflächen, insbesondere kaltgewalzter Stahl (CRS), beschichtet werden sollen. Er ist vorzugsweise in einem Gehalt im Bereich von 0,1 bis 50 g/L und besonders bevorzugt in einem Gehalt im Bereich von 1 bis 20 g/L in der wässerigen Zusammensetzung enthalten bzw. vorzugsweise in einem Gehalt im Bereich von 0,01 bis 5 Gew.-Teilen, besonders bevorzugt im Bereich von 0,03 bis 2 Gew.-Teilen, ganz besonders bevorzugt im Bereich von 0,05 bis 1,2 Gew.-Teilen, bezogen auf 100 Gew.-Teile Wasser.

Das Verhältnis der Gehalte an organischem Filmbildner zu Gehalten an Gleitmittel in der wässerigen Zusammensetzung (Badlösung) kann in weiten Bereichen schwanken; insbesondere kann es bei ≥ 2 : 1 liegen. Vorzugsweise liegt dieses Verhältnis in einem Bereich von 3 : 1 bis 50 : 1, besonders bevorzugt in einem Bereich von 10 : 1 bis 20 : 1.

Das Verhältnis der Gehalte an organischem Filmbildner zu Gehalten an mindestens einem Korrosionsinhibitor in der wässerigen Zusammensetzung (Badlösung) kann in weiten Bereichen schwanken; insbesondere kann es bei ≤ 500 : 1 liegen. Vorzugsweise liegt dieses Verhältnis in einem Bereich von 5 : 1 bis 400 : 1, besonders bevorzugt in einem Bereich von 10 : 1 bis 100 : 1.

Die erfindungsgemäße wässerige Zusammensetzung ist vorzugsweise frei von Zusätzen an freiem Fluorid, an Komplexfluorid wie z.B. Hexafluorotitansäure oder Hexafluorozirkonsäure oder/und an anderweitig gebundenem Fluorid.

Besonders vorteilhafte erfindungsgemäße Zusammensetzungen enthalten u.a. mindestens ein Mischpolymerisat z.B. auf Basis von Acryl-Polyester-Polyurethan, Styrol oder/und Ethylen-Acryl als Filmbildner, mindestens eine anorganische Verbindung in Partikelform insbesondere auf Basis von Aluminiumoxid, Aluminiumphosphid, Eisenoxid, Eisenphosphid, Glimmer, Lanthanidoxid(en) z.B. auf Basis Ceroxid, Molybdänsulfid, Graphit, Ruß, Silicat, Siliciumdioxid, kolloidalem Siliciumdioxid, Zinkoxid oder/und Zirkoniumoxid, mindestens ein Vemetzungsmittel, mindestens einen organischen Korrosionsinhibitor und ggf. weitere Zusätze wie u.a. mindestens ein Silan/Polysiloxan. Die Partikel mit einer höheren oder hohen elektrischen Leitfähigkeit können für die Anwendung zum Schweißen auch so ausgewählt werden, daß sie eine solche mittlere Partikelgröße aufweisen, daß sie ggf. aus der erfindungsgemäßen Schicht etwas stärker herausragen.

Die erfindungsgemäße Lösung bzw. Dispersion zum Beschichten kann mindestens ein Vernetzungsmittel insbesondere auf Basis einer basischen Verbindung enthalten, um die Resistenz gegen angreifende Medien wie Chemikalien und Witterungseinflüsse sowie gegen mechanische Beanspruchungen zu bewirken und um die Farbstabilität insbesondere bei Aluminium und Aluminium-haltigen Oberflächen bei hoher Luftfeuchtigkeit bzw. Feuchtraumbeanspruchung zu sichern und das Darkening zu vermeiden. Vorteilhaft sind vor allem Vernetzungsmittel auf Basis von Titan, Hafnium oder/und Zirkonium bzw. solche auf Basis von Carbonat oder Ammoniumcarbonat, vor allem auf Basis von Titan oder/und Zirkonium. Es ist vorzugsweise in einem Gehalt im Bereich von 0,1 bis 30 g/L und besonders bevorzugt in einem Gehalt im Bereich von 1 bis 10 g/L in der wässerigen Zusammensetzung enthalten bzw. vorzugsweise in einem Gehalt im Bereich von 0,01 bis 3 Gew.-Teilen, besonders bevorzugt im Bereich von 0,1 bis 1 Gew.-Teilen, ganz besonders bevorzugt im Bereich von 0,2 bis 0,6 Gew.-Teilen, bezogen auf 100 Gew.-Teile Wasser.

Außerdem ist es vorteilhaft, mindestens ein Netzmittel zuzusetzen, um den Naßfilm gleichmäßig in der flächigen Ausbreitung und in der Schichtdicke sowie dicht und ohne Fehlstellen aufbringen zu können. Grundsätzlich sind viele Netzmittel hierfür geeignet, vorzugsweise Acrylate, Silane, Polysiloxane, langkettige Alkohole, die die Oberflächenspannung der wässerigen Zusammensetzung herabsetzen. In vielen Fällen wird der Zusatz eines Entschäumers notwendig sein. Zur besseren Verfilmung der polymeren Partikel der wässerigen Zusammensetzung während der Trocknung kann, insbesondere als temporärer Weichmacher der Polymerpartikel, ein langkettiger Alkohol, vorzugsweise ein Butandiol, insbesondere auf Basis von Triäthylenglykol oder Tripropylenglykol, dienen. Grundsätzlich sind die hierbei zusetzbaren und hilfreichen Additive dem Fachmann bekannt.

Die wässerige Zusammensetzung kann gegebenenfalls jeweils mindestens ein Biozid, einen Entschäumer, ein Netzmittel oder/und mindestens einen weiteren Zusatz wie er für Lacke oder lackähnliche Zusammensetzungen typisch ist, enthalten.

Bei dem erfindungsgemäßen Verfahren kann die wässerige Zusammensetzung durch Aufwalzen, Fluten, Aufrakeln, Spritzen, Sprühen, Streichen oder Tauchen, auch Tauchen bei erhöhter Temperatur der wässerigen Zusammensetzung, und ggf. durch nachfolgendes Abquetschen z.B. mit einer Rolle aufgetragen werden.

Die wässerige Zusammensetzung kann einen pH-Wert im Bereich von 0,5 bis 12, vorzugsweise im Bereich von 1 bis 6 bzw. 7 bis 9, besonders bevorzugt im Bereich von 1,5 bis 4 bzw. 6 bis 10,5 aufweisen, je nachdem, ob im sauren oder eher basischen Bereich gearbeitet wird.

Die wässerige Zusammensetzung kann insbesondere bei einer Temperatur im Bereich von 5 bis 50 °C auf die metallische Oberfläche aufgebracht werden, vorzugsweise im Bereich von 10 bis 40 °C, besonders bevorzugt im Bereich von 18 bis 25 °C, bzw. bei 30 bis 95 °C.

Bei dem erfindungsgemäßen Verfahren kann die metallische Oberfläche bei der Applikation der Beschichtung auf Temperaturen im Bereich von 5 bis 120 °C, vorzugsweise im Bereich von 10 bis 60 °C, ganz bevorzugt von 18 bis 25 °C gehalten werden, bzw. bei 50 bis 120 °C.

Das Endtrocknen kann bei derartigen Filmen viele Tage andauern, während die wesentliche Trocknung bereits in wenigen Sekunden vollzogen werden kann. Das Aushärten kann dabei u.U. über mehrere Wochen dauern, bis der Endtrocknungs- und Aushärtungszustand erreicht ist, wobei eine Verfilmung oder/und eine Vernetzung auftreten kann. Bei Bedarf kann der Aushärtungszustand zusätzlich durch Beschleunigung der Vernetzung durch Bestrahlung z.B. mit UV-Strahlung oder durch Erwärmen beschleunigt bzw. verstärkt werden oder/und auch durch Zusatz von und Reaktion mit z.B. freie NCO-Gruppen-haltigen Verbindungen mit den Carboxylgruppen der Carboxylgruppen-haltigen Polymere.

Weiterhin kann die beschichtete metallische Oberfläche bei einer Temperatur im Bereich von 20 bis 400 °C, vorzugsweise im Bereich von 40 bis 120 °C bzw. im Bereich von 140 bis 350 °C, ganz besonders bevorzugt bei 60 bis 100 °C bzw. bei 160 bis 300 °C PMT (peak-metal-temperature) getrocknet werden - je nach chemischer Zusammensetzung der organischen Filmbildner. Die notwendige Verweilzeit beim Trocknen ist im wesentlichen umgekehrt proportional zur Trockentemperatur: Z.B. bei bandförmigem Material 1 bis 3 s bei 100 °C bzw. 1 bis 20 s bei 250 °C je nach der chemischen Zusammensetzung der Kunstharze bzw. Polymere oder 30 min bei 20 °C, während Polyesterharze mit freien Carboxylgruppen in Kombination mit Melamin-Formaldehydharzen nicht bei Temperaturen unter 120 °C getrocknet werden können. Andererseits müssen beschichtete Formteile u.a. je nach Wanddikke deutlich länger getrocknet werden. Zum Trocknen eignen sich insbesondere Trockeneinrichtungen auf Basis von Umluft, Induktion, Infrarot oder/und Mikrowellen.

Die Schichtdicke der erfindungsgemäßen Beschichtung liegt bevorzugt im Bereich von 0,1 bis 6 µm, besonders bevorzugt im Bereich von 0,2 bis 5 µm, ganz besonders bevorzugt im Bereich von 0,4 bis 4 µm, insbesondere im Bereich von 0,7 bis 2 µm.

Vorzugsweise liegen die Flächenanteile der enthafteten Fläche bei dem T-Bend-Test an mit Coil Coating-Lack beschichteten Formteilen (Blechen) bei bis zu 8 %, besonders bevorzugt bei bis zu 5 %, ganz besonders bevorzugt bei bis zu 2 %, wobei jedoch die besten Werte bei näherungsweise 0 % liegen, so daß dann üblicherweise nur Risse auftreten. Hierfür kann vorzugsweise ein Coil-Coating-Lack auf Basis von Silicon-Polyester eingesetzt werden, insbesondere für vergleichende Tests in für beschichtete Coils typischen Prüfungen. Die Rißfreiheit bzw. die Größe der Risse ist hierbei jedoch auch wesentlich von der Beschaffenheit des eingesetzten Lackes abhängig.

Bei der Beschichtung von Bändern können die beschichteten Bänder zu einem Coil (Bandspule) aufgewickelt werden, ggf. nach einer Abkühlung auf eine Temperatur im Bereich von 40 bis 70 °C.

Auf den teilweise oder gänzlich getrockneten bzw. ausgehärteten Film kann jeweils mindestens eine Beschichtung aus Lack, Polymer, Lackfarbe, funktionelle Kunststoffbeschichtungen, Klebstoff oder/und Klebstoffträger wie z.B. eine Selbstklebefolie aufgebracht werden, insbesondere ein Naßlack, ein Pulverlack, eine Kunststoffbeschichtung, ein Klebstoff u.a. zur Folienbeschichtung.

Die erfindungsgemäß mit der wässerigen Zusammensetzung beschichteten Metallteile, insbesondere Bänder oder Bandabschnitte, können umgeformt, lackiert, mit Polymeren wie z.B. PVC beschichtet, bedruckt, beklebt, heißgelötet, geschweißt oder/und durch Clinchen oder andere Fügetechniken miteinander oder mit anderen Elementen verbunden werden. Diese Verfahren sind für die Beschichtung von metallischem Band für Architekturanwendungen grundsätzlich bekannt. In der Regel wird zuerst lackiert oder anderweitig beschichtet und danach umgeformt. Wenn die erfindungsgemäße Beschichtung lackiert oder mit Kunststoff beschichtet ist können Löt- bzw. Schweißverbindungen nicht hergestellt werden, ohne daß die Beschichtungen wenigstens lokal entfernt werden.

Die Aufgabe wird ferner gelöst mit einer wässerigen Zusammensetzung zur Vorbehandlung einer metallischen Oberfläche vor einer weiteren Beschichtung oder zur Behandlung jener Oberfläche, die sich dadurch auszeichnet, daß die Zusammensetzung neben Wasser
a) mindestens einen organischen Filmbildner, der mindestens ein wasserlösliches oder wasserdispergiertes Polymer mit einer Säurezahl im Bereich von 5 bis 200 enthält, auf der Basis von
   Acryl-Polyester-Polyurethan-Mischpolymerisat,
   Acryl-Polyester-Polyurethan-Styrol-Mischpolymerisat,
   Ethylen-Acryl-Polyester-Polyurethan-Mischpolymerisat,
   Ethylen-Acryl-Polyester-Polyurethan-Styrol-Mischpolymerisat,
   Ethylen-Acryl-Mischpolymerisat,
   Ethylen-Acryl-Styrol-Mischpolymerisat,
   Polyesterharzen mit freien Carboxylgruppen kombiniert mit Melamin-Formaldehydharzen,
   einem Mischpolymerisat auf der Basis von Acrylat und Styrol,
   einem Mischpolymerisat auf der Basis von Styrolbutadien oder/und
   einem Mischpolymerisat von Acrylat und Epoxid bzw. auf der Basis von einem Acryl-modifizierten Carboxylgruppen-haltigen Polyester zusammen mit Melamin-Formaldehyd und Ethylen-Acryl-Mischpolymerisat,
b) mindestens eine anorganische Verbindung in Partikelform mit einem mittleren Partikeldurchmesser gemessen an einem Rasterelektronenmikroskop im Bereich von 0,005 bis zu 0,3 µm Durchmesser,
c) mindestens ein Gleitmittel,
d) mindestens einen langkettigen Alkohol und
e) mindestens einen organischen Korrosionsinhibitor, mindestens ein Silan oder/und Siloxan berechnet als Silan oder/und mindestens ein Vernetzungsmittel insbesondere auf Basis einer basischen Verbindung sowie
f) ggf. mindestens ein organisches Lösemittel enthält.

Das mit der wässerigen Zusammensetzung erfindungsgemäß beschichtete Teil mit einer metallischen Oberfläche kann ein Draht, eine Drahtwicklung, ein Drahtgeflecht, ein Stahlband, ein Blech, eine Verkleidung, eine Abschirmung, eine Karosserie oder ein Teil einer Karosserie, ein Teil eines Fahrzeugs, Anhängers, Wohnmobils oder Flugkörpers, eine Abdeckung, ein Gehäuse, eine Lampe, eine Leuchte, ein Ampelelement, ein Möbelstück oder Möbelelement, ein Element eines Haushaltsgeräts, ein Gestell, ein Profil, ein Formteil komplizierter Geometrie, ein Leitplanken-, Heizkörper- oder Zaunelement, eine Stoßstange, ein Teil aus oder mit mindestens einem Rohr oder/und einem Profil, ein Fenster-, Tür- oder Fahrradrahmen oder ein Kleinteil wie z.B. eine Schraube, Mutter, Flansch, Feder oder ein Brillengestell sein.

Das erfindungsgemäße Verfahren stellt eine Alternative zu den genannten Chrömat-reichen sowie Säure-freien bzw. Säure-haltigen Verfahren dar, insbesondere im Bereich der Oberflächenvorbehandlung von Metallband vor der Lackierung, und liefert im Vergleich zu ihnen ähnlich gute Ergebnisse hinsichtlich Korrosionsschutz und Lackhaftung. Die erfindungsgemäßen Beschichtungen können weitgehend oder gänzlich frei sein nicht nur von Chrom(VI)-Verbindungen, sondern auch von Chrom(III)-Verbindungen, ohne dadurch an Qualität zu verlieren.

Das erfindungsgemäße Verfahren kann jedoch auch vorteilhaft mit einem Gehalt an mindestens einer chromhaltigen Verbindung eingesetzt werden, wenn der Korrosionsschutz in großer Breite und mit hoher Sicherheit erhalten bleiben soll, besonders an Beschädigungen der Schutzschicht, die durch mechanische Beanspruchungen während Transport, Lagerung und Montage der mit der erfindungsgemäßen Behandlungsflüssigkeit auf der Substratoberfläche behandelten Substrate verursacht werden können. Dann können beispielsweise Natriumbichromat, Kaliumbichromat oder/und Ammoniumbichromat zugesetzt werden. Der Gehalt an Chrom(VI)-Verbindungen beträgt dann vorzugsweise 0,01 bis 100 g/l, besonders bevorzugt, 0,1 bis 30 g/l.

Darüberhinaus ist es möglich, das erfindungsgemäße Verfahren zur Behandlung der in herkömmlicher Weise gereinigten Metalloberfläche ohne eine darauf folgende Nachbehandlung wie dem Spülen mit Wasser oder einer geeigneten Nachspüllösung einzusetzen. Das erfindungsgemäße Verfahren ist insbesondere für die Applikation der Behandlungslösung mittels Abquetschwalzen bzw. mittels eines sog. Rollcoaters geeignet, wobei die Behandlungslösung unmittelbar nach der Applikation ohne weitere, zwischengeschaltete Verfahrensschritte eingetrocknet werden kann (Dry In Place-Technologie). Dadurch wird das Verfahren z.B. gegenüber herkömmlichen Spritz- bzw. Tauchverfahren, insbesondere solchen mit anschließenden Spülgängen wie z.B. einer Chromatierung oder Zinkphosphatierung, erheblich vereinfacht, und es fallen nur geringste Mengen an Spülwasser zur Anlagenreinigung nach dem Arbeitsende an, weil kein Spülprozeß nach der Applikation notwendig ist, was auch gegenüber den bereits etablierten, im Spritzverfahren mit Nachspüllösungen arbeitenden chromfreien Verfahren einen Vorteil darstellt. Diese Spülwässer können einem neuen Ansatz der Badlösung wieder zugesetzt werden.

Dabei ist es gut möglich, die erfindungsgemäße polymere, ggf. chromatfreie, Beschichtung ohne vorhergehenden Auftrag einer zusätzlichen Vorbehandlungsschicht einzusetzen, so daß ein hervorragender dauerhafter Schutz der metallischen Oberflächen und insbesondere auf AlSi-, ZnAl- wie Galfan^{®},

AlZn- wie Galvalume^{®}, ZnFe-, ZnNi- wie Galvanneal^{®} und anderen Zn-Legierungen als metallische Beschichtungen bzw. Al- und Zn-Beschichtungen möglich ist, der durch Auftrag einer Polymer-haltigen Beschichtung erzielt werden kann. Darüber hinaus hat sich die erfindungsgemäße Beschichtung auch bei stärker korrosionsanfälligen metallischen Oberflächen wie solchen aus Eisen- und Stahl-Legierungen, insbesondere bei kaltgewalztem Stahl, gut bewährt, wobei es dann vorteilhaft ist, mindestens einen Korrosionsinhibitor der wässerigen Zusammensetzung zuzusetzen. Hierdurch kann die Flash-Rust-Bildung während der Trocknung der Behandlungsflüssigkeit auf kaltgewalztem Stahl (CRS) unterbunden werden.

Somit ist ein kostengünstiger und umweltfreundlicher Korrosionsschutz erzielbar, der auch nicht einer kostspieligen UV-Aushärtung bedarf, sondern allein mit der Trocknung und Verfilmung bzw. mit der "gewöhnlichen chemischen" Aushärtung, die oft als "thermische Vemetzung" bezeichnet wird, ausreichend aushärtbar ist. In manchen Fällen kann es jedoch von Interesse sein, in einem bestimmten Prozeßschritt schnell eine härtere Beschichtung zu erhalten. Dann kann es vorteilhaft sein, daß mindestens ein Photoinitiator zugesetzt und mindestens eine UV-härtbare Polymerkomponente ausgewählt wird, um eine teilweise Vernetzung auf der Basis von aktinischer Strahlung, insbesondere von UV-Strahlung, zu erzielen. Dann kann die erfindungsgemäße Beschichtung teilweise durch aktinische Strahlung und teilweise durch Trocknen und Verfilmen bzw. durch thermische Vernetzung zur Aushärtung gebracht werden. Das kann insbesondere beim Applizieren auf schnell laufenden Bandanlagen bzw. für die erste Vernetzung (= Aushärtung) von Bedeutung sein. Der Anteil der sog. UV-Vernetzung kann dabei 0 bis 50 % der gesamten möglichen Aushärtung betragen, vorzugsweise 10 bis 40 %.

Die erfindungsgemäße polymere und weitgehend oder gänzlich chromatfreie Beschichtung hat weiterhin den Vorteil, daß sie - insbesondere bei einer Schichtdicke im Bereich von 0,5 bis 3 µm - transparent und hell ist, so daß durch die Beschichtung hindurch der metallische Charakter und die typische Struktur z.B. einer verzinkten bzw. einer Galvalume^{®}-Oberfläche genau und unverändert oder nahezu unverändert erkennbar bleibt. Außerdem sind derartig dünne Beschichtungen noch problemlos schweißbar.

Die erfindungsgemäße polymere Beschichtung ist darüber hinaus sehr gut verformbar, da sie so eingestellt werden kann, daß sie sich nach dem Beschichten, Trocknen und Aushärten sowie ggf. auch auf Dauer in einem relativ plastischen und nicht in einem harten, spröden Zustand befindet.

Die erfindungsgemäße Polymer-haltige Beschichtung läßt sich mit den meisten Lacken bzw. Kunststoffen gut überlackieren.Die erfindungsgemäße Polymer-haltige Beschichtung kann nachlackiert werden oder mit Kunststoff wie PVC beschichtet werden durch Auftragsverfahren wie z.B. Pulverlackieren, Naßlackieren, Fluten, Rollen, Streichen oder Tauchen. Meistens weisen die dadurch erzeugten ausgehärteten Beschichtungen, die auf die erfindungsgemäße Polymer-haltige Beschichtung aufgetragen werden, wobei oft auch zwei oder drei Lack- oder Kunststoffschichten aufgebracht werden können, eine Gesamtschichtdicke im Bereich von 5 bis zu 1500 µm auf.

Die erfindungsgemäße polymere Beschichtung ist auch z.B. mit Polyurethan-Isolierschaum problemlos hinterschäumbar für die Herstellung von 2-Blech-Sandwicheiementen oder mit den üblichen Konstruktionsklebstoffen, wie sie z.B. im Fahrzeugbau eingesetzt werden, gut verklebbar.

Die erfindungsgemäßen Beschichtungen können vor allem als Primerschichten eingesetzt werden. Sie eignen sich hervorragend ohne, aber auch mit mindestens einer vorher aufgebrachten Vorbehandlungsschicht. Diese Vorbehandlungsschicht kann dann u.a. eine Beschichtung auf Basis von Phosphat, insbesondere ZnMnNi-Phosphat, oder auf Basis von Phosphonat, Silan oder/und einem Gemisch auf Basis von Fluoridkomplex, Korrosionsinhibitor, Phosphat, Polymer oder/und fein verteilten Partikeln sein.

Mit den erfindungsgemäßen Beschichtungen werden Vorbehandlungsschichten bzw. Primerschichten erzielt, die zusammen mit dem nachfolgend aufgebrachten Lack ein Beschichtungssystem ergaben, das den besten chromhaltigen Beschichtungssystemen gleichwertig ist.

Die erfindungsgemäßen Beschichtungen sind sehr preiswert, umweltfreundlich und gut großtechnisch einsetzbar.

Es war überraschend, daß mit einer erfindungsgemäßen Kunstharzbeschichtung trotz einer Schichtdicke von nur ca. 0,5 bis 1,5 µm ein außerordentlich hochwertiger chromfreier Film hergestellt werden konnte, der die Substratoberflächen nicht verfärbt und einen außerordentlich guten Korrosionsschutz ergibt. Weiterhin war es überraschend, daß allein der Zusatz feinteiliger Partikel eine signifikante Verbesserung der Korrosionsbeständigkeit ergab. Erstaunlicherweise hat das basische Vernetzungsmittel - insbesondere zusammen mit einem organischen Korrosionsinhibitor - den Korrosionsschutz noch einmal deutlich verbessert.

Das erfindungsgemäße Verfahren hat gegenüber den bisher beschriebenen oder/und praktizierten Verfahren weiterhin den Vorteil, daß es auf Aluminium-reichen bzw. auf einem mit einer Aluminium-haltigen Legierung beschichteten Substrat - insbesondere bei einem Substrat aus Stahl - keine Dunkelfärbung der Substratoberfläche und auch keine milchig-weiße Mattierung der Substratoberfläche verursacht und somit zur dekorativen Gestaltung von Gebäuden oder/und Gebäudeteilen ohne zusätzliche farbgebende Lackierung einsetzbar ist. Die Ästhetik der Metalloberfläche bleibt unverändert.

### Beispiele:

Die im folgenden beschriebenen Beispiele sollen den Gegenstand der Erfindung näher erläutern. Die angegebenen Konzentrationen und Zusammensetzungen beziehen sich auf die Behandlungslösung selbst und nicht auf ggf. verwendete Ansatzlösungen höherer Konzentration. Alle Konzentrationsanangaben sind als Festkörperanteile zu verstehen, d.h., die Konzentrationen beziehen sich auf die Gewichtsanteile der wirksamen Komponenten unabhängig davon, ob die eingesetzten Rohstoffe in verdünnter Form z.B. als wäßrige Lösungen vorlagen. Zusätzlich zu den im folgenden aufgeführten Zusammensetzungen kann es in der kommerziellen Praxis erforderlich oder erwünscht sein, weitere Additive zuzusetzen oder die Mengen entsprechend anzupassen, beispielsweise entweder die Gesamtmenge an Zusätzen heraufzusetzen oder z.B. die Menge des Entschäumers oder/und des Verlaufmittels wie z.B. ein Polysiloxan heraufzusetzen.

Als Kunstharze wurde ein Styrolacrylat mit einer Glasübergangstemperatur im Bereich von 15 bis 25 °C und mit einer mittleren Partikelgröße im Bereich von 120 bis 180 nm, ein Acryl-Polyester-Polyurethan-Mischpolymerisat mit einem Blockpunkt im Bereich von 140 bis 180 °C und einer Glasübergangstemperatur im Bereich von 20 bis 60 °C, ein Ethylen-Acryl-Mischpolymerisat mit einem Schmelzpunkt im Bereich von 70 bis 90 °C, und mit einem Acrylmodifizierter Carboxyl-Gruppen-haltiger Polyester insbesondere mit einer Zahl an OH-Gruppen im Bereich von 80 bis 120 und mit einer Säurezahl im Bereich von 50 bis 90, berechnet auf das Festharz, sowie mit einer Abhärtung z.B. durch Zusatz von Hexamethoxymethylmelamin mit einer Säurezahl kleiner 5 eingesetzt. Das Styrol-Butadien-Copolymerisat weist eine Glasübergangstemperatur im Bereich von - 20 bis + 20 °C auf und eine Säurezahl im Bereich von 5 bis 30; aufgrund des Gehalts an Carboxylgruppen ist dieses Copolymerisat z.B. mit Melaminharzen oder mit Isocyanat-haltigen Polymeren zusätzlich vemetzbar. Das Mischpolymerisat auf der Basis von Epoxid-Acrylat hat eine Säurezahl im Bereich von 10 bis 18 und eine Glasübergangstemperatur zwischen 25 und 40 °C. Dieses Mischpolymerisat für die Beschichtung insbesondere von Stahl gibt dem erfindungsgemäßen Überzug eine höhere chemische Beständigkeit, insbesondere im basischen Bereich, und verbessert die Hafteigenschaften zum metallischen Untergrund.

Die pyrogene Kieselsäure weist einen BET-Wert im Bereich von 90 bis 130 m²/g auf, das kolloidale Siliciumdioxid eine mittlere Partikelgröße im Bereich von 10 bis 20 nm. Das Melamin-Formaldehyd diente als Vernetzungspartner für das carboxylgruppenhaltige Polyesterharz. Das oxidierte Polyethylen diente als Gleit- und Umformmittel (Wachs) und wies einen Schmelzpunkt im Bereich von 125 bis 165°C auf. Das eingesetzte Polysiloxan war ein polyethermodifiziertes Dimethylpolysiloxan und diente als Benetzungs- und Verlaufsmittel des Naßfilms während der Applikation. Der Entschäumer war ein Gemisch aus Kohlenwasserstoffen, hydrophober Kieselsäure, oxalierten Verbindungen und nichtionogenen Emulgatoren. Als langkettiger Alkohol wurde ein Tripropylenglykol-mono-n-Butylether zur Filmbildung verwendet.

### A) Behandlung bzw. Vorbehandlung von Galvalume^{®}-Stahlblechen:

### Erfindungsgemäßes Beispiel 1:

Stahlbleche, die aus handelsüblichem kaltgewalzten und anschließend legierungsverzinktem Stahlband z. B. mit 55 % AlZn (Galvalume^{®}) erhalten wurden, die zum Zwecke des Schutzes bei der Lagerung beölt waren, wurden zunächst in einem alkalischen Spritzreiniger entfettet, mit Wasser gespült, bei erhöhter Temperatur getrocknet und anschließend mit der erfindungsgemäßen wässerigen Zusammensetzung behandelt. Dabei wurde eine definierte Menge der wässerigen Zusammensetzung (Badlösung) mit Hilfe eines Rollcoaters so aufgetragen, daß sich eine Naßfilmdicke von ca. 10 ml/m² ergab. Anschließend wurde der Naßfilm bei Temperaturen im Bereich von 80 bis 100 °C PMT aufgetrocknet, verfilmt und ausgehärtet. Die Badlösung bestand aus:

| | |
|---|---|
| 100 Gew. TI. | Wasser, |
| 6,40 Gew. TI. | Styrolacrylat, |
| 2,50 Gew. TI. | pyrogener Kieselsäure, |
| 0,50 Gew. TI. | oxidiertem Polyethylen, |
| 0,10 Gew. Tl. | Polysiloxan, |
| 0,10 Gew. TI. | Entschäumer und |
| 0,40 Gew. TI. | langkettigem Alkohol. |

Die Bestandteile wurden in der angegebenen Reihenfolge gemischt, und der pH-Wert der Lösung wurde anschließend mit einer Ammoniaklösung auf 8,2 eingestellt. Die Lösung wurde nach dem Auftrag in einem Umluftofen bei ca. 90 °C PMT (peak-metal-temperature) getrocknet. Die in dieser Weise behandelten Stahlbleche wurden danach auf ihren Korrosionsschutz und ihre mechanischen Eigenschaften geprüft.

### Erfindungsgemäßes Beispiel 2:

Legierungsverzinkte Stahlbleche wurden wie im Beispiel 1 beschrieben mit der nachfolgenden wässerigen Zusammensetzung behandelt, getrocknet und geprüft:

| | |
|---|---|
| 100 Gew. TI. | Wasser, |
| 6,40 Gew. TI. | Styrolacrylat, |
| 2,50 Gew. TI. | kolloidales Siliciumdioxid mit einer durchschnittliche Partikelgröße im Bereich von 10 bis 20 nm |
| 0,50 Gew. TI. | oxidiertes Polyethylen, |
| 0,10 Gew. Tl. | Polysiloxan, |
| 0,10 Gew. TI. | Entschäumer |
| 0,40 Gew. TI. | langkettiger Alkohol. |

### Erfindungsgemäßes Beispiel 3:

Legierungsverzinkte Stahlbleche wurden wie im Beispiel 1 beschrieben mit der nachfolgenden Zusammensetzung behandelt, getrocknet und geprüft:

| | |
|---|---|
| 100 Gew. TI. | Wasser, |
| 6,40 Gew. TI. | Acryl-Polyester-Polyurethan-Mischpolymerisat, |
| 2,50 Gew. TI. | kolloidales Siliciumdioxid mit einer durchschnittliche Partikelgröße im Bereich von 10 bis 20 nm |
| 0,50 Gew. TI. | oxidiertes Polyethylen, |
| 0,10 Gew. Tl. | Polysiloxan, |
| 0,10 Gew. TI. | Entschäumer und |
| 0,40 Gew. TI. | langkettiger Alkohol. |

### Erfindungsgemäßes Beispiel 4:

Legierungsverzinkte Stahlbleche wurden wie im Beispiel 1 beschrieben mit der nachfolgenden Zusammensetzung behandelt, getrocknet und geprüft:

| | |
|---|---|
| 100 Gew. TI. | Wasser, |
| 3,40 Gew. TI. | Acryl-Polyester-Polyurethan-Mischpolymerisat, |
| 3,00 Gew. Tl. | Ethylen-Acryl-Mischpolymerisat mit einem Schmelzpunkt im Bereich von 70 bis 90 °C, |
| 2,50 Gew. TI. | kolloidales Siliciumdioxid mit einer durchschnittliche Partikelgröße im Bereich von 10 bis 20 nm |
| 0,50 Gew. TI. | oxidiertes Polyethylen, |
| 0,10 Gew. Tl. | Polysiloxan, |
| 0,10 Gew. TI. | Entschäumer und |
| 0,40 Gew. TI. | langkettiger Alkohol. |

### Erfindungsgemäßes Beispiel 5:

Legierungsverzinkte Stahlbleche wurden wie im Beispiel 1 beschrieben mit der nachfolgenden Zusammensetzung behandelt, getrocknet und geprüft:

| | |
|---|---|
| 100 Gew. TI. | Wasser, |
| 3,00 Gew. TI. | Acryl-Polyester-Polyurethan-Mischpolymerisat, |
| 3,00 Gew. Tl. | Ethylen-Acryl-Mischpolymerisat mit einem Schmelzpunkt im Bereich von 70 bis 90 °C, |
| 2,50 Gew. TI. | kolloidales Siliciumdioxid mit einer durchschnittliche Partikelgröße im Bereich von 10 bis 20 nm |
| 0,40 Gew. TI. | Kombination aus Silanen mit funktionellem und nicht funktionellem Charakter, hydrolysiert, |
| 0,50 Gew. TI. | oxidiertes Polyethylen, |
| 0,10 Gew. Tl. | Polysiloxan, |
| 0,10 Gew. TI. | Entschäumer und |
| 0,40 Gew. TI. | langkettiger Alkohol. |

.

### Erfindungsgemäßes Beispiel 6:

Legierungsverzinkte Stahlbleche wurden wie im Beispiel 1 beschrieben mit der nachfolgenden Zusammensetzung behandelt, getrocknet und geprüft:

| | |
|---|---|
| 100 Gew. TI. | Wasser, |
| 2,40 Gew. TI. | Acryl-Polyester-Polyurethan-Mischpolymerisat, |
| 1,00 Gew. TI. | Styrolacrylat, |
| 3,00 Gew. Tl. | Ethylen-Acryl-Mischpolymerisat mit einem Schmelzpunkt im Bereich von 70 bis 90 °C, |
| 2,50 Gew. TI. | kolloidales Siliciumdioxid mit einer durchschnittliche Partikelgröße im Bereich von 10 bis 20 nm |
| 0,50 Gew. TI. | oxidiertes Polyethylen, |
| 0,10 Gew. Tl. | Polysiloxan, |
| 0,10 Gew. TI. | Entschäumer und |
| 0,40 Gew. TI. | langkettiger Alkohol. |

### Erfindungsgemäßes Beispiel 7:

Legierungsverzinkte Stahlbleche wurden wie im Beispiel 1 beschrieben mit der nachfolgenden Zusammensetzung behandelt, getrocknet und geprüft:

| | |
|---|---|
| 100 Gew. TI. | Wasser, |
| 3,70 Gew. TI. | Acryl-Polyester-Polyurethan-Mischpolymerisat, |
| 1,00 Gew. TI. | Styrolacrylat, |
| 3,00 Gew. TI. | Ethylen-Acryl-Mischpolymerisat mit einem Schmelzpunkt im Bereich von 70 bis 90 °C, |
| 1,50 Gew. TI. | kolloidales Siliciumdioxid mit einer durchschnittliche Partikelgröße im Bereich von 10 bis 20 nm |
| 0,50 Gew. TI. | oxidiertes Polyethylen, |
| 0,10 Gew. TI. | Polysiloxan, |
| 0,10 Gew. TI. | Entschäumer und |
| 0,40 Gew. TI. | langkettiger Alkohol. |

### Erfindungsgemäßes Beispiel 8:

Legierungsverzinkte Stahlbleche wurden wie im Beispiel 1 beschrieben mit der nachfolgenden Zusammensetzung behandelt, getrocknet und geprüft:

| | |
|---|---|
| 100 Gew. TI. | Wasser, |
| 3,90 Gew. TI. | Acryl-Polyester-Polyurethan-Mischpolymerisat, |
| 1,00 Gew. TI. | Styrolacrylat, |
| 1,50 Gew. TI. | Ethylen-Acryl-Mischpolymerisat mit einem Schmelzpunkt im Bereich von 70 bis 90 °C, |
| 2,50 Gew. TI. | kolloidales Siliciumdioxid mit einer durchschnittliche Partikelgröße im Bereich von 10 bis 20 nm |
| 0,50 Gew. TI. | oxidiertes Polyethylen, |
| 0,10 Gew. TI. | Polysiloxan, |
| 0,10 Gew. TI. | Entschäumer und |
| 0,40 Gew. TI. | langkettiger Alkohol. |

### Erfindungsgemäßes Beispiel 9:

Legierungsverzinkte Stahlbleche wurden wie im Beispiel 1 beschrieben mit der nachfolgenden Zusammensetzung behandelt, getrocknet und geprüft, jedoch anders als im Beispiel 1 bei 180°C PMT getrocknet:

| | |
|---|---|
| 100 Gew. TI. | Wasser, |
| 5,70 Gew. TI. | carboxylgruppenhaltiger Polyester,, |
| 0,60 Gew. TI. | Melamin-Formaldehyd, |
| 1,00 Gew. TI. | Ethylen-Acryl-Mischpolymerisat mit einem Schmelzpunkt im Bereich von 70 bis 90 °C, |
| 0,50 Gew. TI. | oxidiertes Polyethylen, |
| 0,10 Gew. TI. | Polysiloxan und |
| 0,10 Gew. TI. | Entschäumer und |
| 0,40 Gew. TI. | langkettiger Alkohol. |

### Erfindungsgemäßes Beispiel 10:

Legierungsverzinkte Stahlbleche wurden wie im Beispiel 1 beschrieben mit der nachfolgenden Behandlungsflüssigkeit behandelt, getrocknet und geprüft:

| | |
|---|---|
| 100 Gew. TI. | Wasser, |
| 2,70 Gew. TI. | Acryl-Polyester-Polyurethan-Mischpolymerisat, |
| 2,00 Gew. TI. | Styrolacrylat, |
| 2,70 Gew. TI. | Ethylen-Acryl-Mischpolymerisat mit einem Schmelzpunkt im Bereich von 70 bis 90 °C, |
| 1,50 Gew. TI. | kolloidales Siliciumdioxid mit einer durchschnittliche Partikelgröße im Bereich von 10 bis 20 nm |
| 0,50 Gew. TI. | oxidiertes Polyethylen, |
| 0,10 Gew. TI. | Polysiloxan, |
| 0,10 Gew. TI. | Entschäumer und |
| 0,40 Gew. TI. | langkettiger Alkohol. |

### Erfindungsgemäßes Beispiel 11:

Legierungsverzinkte Stahlbleche wurden wie im Beispiel 1 beschrieben mit der nachfolgenden Behandlungsflüssigkeit behandelt, getrocknet und geprüft:

| | |
|---|---|
| 100 Gew. TI. | Wasser, |
| 2,60 Gew. TI. | Acryl-Polyester-Polyurethan-Mischpolymerisat, |
| 1,00 Gew. TI. | Styrolacrylat, |
| 2,60 Gew. TI. | Ethylen-Acryl-Mischpolymerisat mit einem Schmelzpunkt im Bereich von 70 bis 90 °C, |
| 1,40 Gew. TI. | kolloidales Siliciumdioxid mit einer durchschnittliche Partikelgröße im Bereich von 10 bis 20 nm |
| 0,50 Gew. TI. | oxidiertes Polyethylen, |
| 0,10 Gew. TI. | Polysiloxan, |
| 0,10 Gew. TI. | Entschäumer |
| 0,40 Gew. TI. | langkettiger Alkohol, |
| 0,40 Gew. TI. | Ammonium-Zirkonium-Carbonat und |
| 0,10 Gew. TI. | organischer Korrosionsinhibitor auf der Basis von einem TPA-Amin-Komplex. |

### Erfindungsgemäßes Beispiel 12:

Legierungsverzinkte Stahlbleche wurden wie im Beispiel 1 beschrieben mit der nachfolgenden Behandlungsflüssigkeit behandelt, getrocknet und geprüft:

| | |
|---|---|
| 100 Gew. TI. | Wasser, |
| 4,40 Gew. TI. | Styrolacrylat, |
| 2,60 Gew. TI. | Ethylen-Acryl-Mischpolymerisat mit einem Schmelzpunkt im Bereich von 70 bis 90 °C, |
| 1,40 Gew. TI. | kolloidales Siliciumdioxid mit einer durchschnittliche Partikelgröße im Bereich von 10 bis 20 nm |
| 0,50 Gew. TI. | oxidiertes Polyethylen, |
| 0,10 Gew. TI. | Polysiloxan, |
| 0,10 Gew. TI. | Entschäumer |
| 0,40 Gew. TI. | langkettiger Alkohol |
| 0,40 Gew. TI. | Ammonium-Zirkonium-Carbonat und |
| 0,10 Gew. TI. | organischer Korrosionsinhibitor auf der Basis von einem TPA-Amin-Komplex. |

### Erfindungsgemäßes Beispiel 13:

Legierungsverzinkte Stahlbleche wurden wie im Beispiel 1 beschrieben mit der nachfolgenden Behandlungsflüssigkeit behandelt, getrocknet und geprüft:

| | |
|---|---|
| 100 Gew. TI. | Wasser, |
| 4,40 Gew. TI. | Acryl-Polyester-Polyurethan-Mischpolymerisat, |
| 2,60 Gew. TI. | Ethylen-Acryl-Mischpolymerisat mit einem Schmelzpunkt im Bereich von 70 bis 90 °C, |
| 1,40 Gew. TI. | kolloidales Siliciumdioxid mit einer durchschnittliche Partikelgröße im Bereich von 10 bis 20 nm |
| 0,50 Gew. TI. | oxidiertes Polyethylen, |
| 0,10 Gew. TI. | Polysiloxan, |
| 0,10 Gew. TI. | Entschäumer |
| 0,40 Gew. TI. | langkettiger Alkohol |
| 0,40 Gew. TI. | Ammonium-Zirkonium-Carbonat und |
| 0,10 Gew. TI. | organischer Korrosionsinhibitor auf der Basis von einem TPA-Amin-Komplex. |

### Vergleichsbeispiel 14:

Legierungsverzinkte Stahlbleche wurden wie im Beispiel 1 beschrieben mit der nachfolgenden Behandlungsflüssigkeit behandelt, getrocknet und geprüft:

| | |
|---|---|
| 100 Gew. TI. | Wasser, |
| 3,09 Gew. TI. | Acryl-Polyester-Polyurethan-Mischpolymerisat, |
| 2,22 Gew. TI. | Styrolacrylat, |
| 3,09 Gew. TI. | Ethylen-Acryl-Mischpolymerisat mit einem Schmelzpunkt im Bereich von 70 bis 90 °C, |
| 0,50 Gew. TI. | oxidiertes Polyethylen, |
| 0,10 Gew. TI. | Polysiloxan, |
| 0,10 Gew. TI. | Entschäumer |
| 0,40 Gew. TI. | langkettiger Alkohol |
| 0,40 Gew. TI. | Ammonium-Zirkonium-Carbonat und |
| 0,10 Gew. TI. | organischer Korrosionsinhibitor auf der Basis von einem TPA-Amin-Komplex. |

Hierbei wurde keine anorganische Verbindung in Partikelform zugesetzt.

### Erfindungsgemäßes Beispiel 15:

Legierungsverzinkte Stahlbleche wurden wie im Beispiel 1 beschrieben mit der nachfolgenden Behandlungsflüssigkeit behandelt, getrocknet und geprüft:

| | |
|---|---|
| 100 Gew. TI. | Wasser, |
| 2,80 Gew. TI. | Acryl-Polyester-Polyurethan-Mischpolymerisat, |
| 2,00 Gew. TI. | Styrolacrylat, |
| 2,80 Gew. TI. | Ethylen-Acryl-Mischpolymerisat mit einem Schmelzpunkt im Bereich von 70 bis 90 °C, |
| 0,80 Gew. TI. | kolloidales Siliciumdioxid mit einer durchschnittlichen Partikelgröße im Bereich von 10 bis 20 nm, |
| 0,50 Gew. TI. | oxidiertes Polyethylen, |
| 0,10 Gew. TI. | Polysiloxan, |
| 0,10 Gew. TI. | Entschäumer |
| 0,40 Gew. TI. | langkettiger Alkohol |
| 0,40 Gew. TI. | Ammonium-Zirkonium-Carbonat und |
| 0,10 Gew. TI. | organischer Korrosionsinhibitor auf der Basis von einem TPA-Amin-Komplex. |

### Erfindungsgemäßes Beispiel 16:

Legierungsverzinkte Stahlbleche wurden wie im Beispiel 1 beschrieben mit der nachfolgenden Behandlungsflüssigkeit behandelt, getrocknet und geprüft:

| | |
|---|---|
| 100 Gew. TI. | Wasser, |
| 2,56 Gew. TI. | Acryl-Polyester-Polyurethan-Mischpolymerisat, |
| 1,82 Gew. TI. | Styrolacrylat, |
| 2,56 Gew. TI. | Ethylen-Acryl-Mischpolymerisat mit einem Schmelzpunkt im Bereich von 70 bis 90 °C, |
| 1,46 Gew. TI. | kolloidales Siliciumdioxid mit einer durchschnittlichen Partikelgröße im Bereich von 10 bis 20 nm, |
| 0,50 Gew. TI. | oxidiertes Polyethylen, |
| 0,10 Gew. TI. | Polysiloxan, |
| 0,10 Gew. TI. | Entschäumer |
| 0,40 Gew. TI. | langkettiger Alkohol |
| 0,40 Gew. TI. | Ammonium-Zirkonium-Carbonat und |
| 0,10 Gew. TI. | organischer Korrosionsinhibitor auf der Basis von einem TPA-Amin-Komplex. |

### Erfindungsgemäßes Beispiel 17:

Legierungsverzinkte Stahlbleche wurden wie im Beispiel 1 beschrieben mit der nachfolgenden Behandlungsflüssigkeit behandelt, getrocknet und geprüft:

| | |
|---|---|
| 100 Gew. TI. | Wasser, |
| 2,35 Gew. TI. | Acryl-Polyester-Polyurethan-Mischpolymerisat, |
| 1,68 Gew. TI. | Styrolacrylat, |
| 2,35 Gew. TI. | Ethylen-Acryl-Mischpolymerisat mit einem Schmelzpunkt im Bereich von 70 bis 90 °C, |
| 2,02 Gew. TI. | kolloidales Siliciumdioxid mit einer durchschnittlichen Partikelgröße im Bereich von 10 bis 20 nm, |
| 0,50 Gew. TI. | oxidiertes Polyethylen, |
| 0,10 Gew. TI. | Polysiloxan, |
| 0,10 Gew. TI. | Entschäumer |
| 0,40 Gew. TI. | langkettiger Alkohol |
| 0,40 Gew. TI. | Ammonium-Zirkonium-Carbonat und |
| 0,10 Gew. TI. | organischer Korrosionsinhibitor auf der Basis von einem TPA-Amin-Komplex. |

### Erfindungsgemäßes Beispiel 18:

Legierungsverzinkte Stahlbleche wurden wie im Beispiel 1 beschrieben mit der nachfolgenden Behandlungsflüssigkeit behandelt, getrocknet und geprüft:

| | |
|---|---|
| 100 Gew. TI. | Wasser, |
| 2,18 Gew. TI. | Acryl-Polyester-Polyurethan-Mischpolymerisat, |
| 1,56 Gew. TI. | Styrolacrylat, |
| 2,18 Gew. TI. | Ethylen-Acryl-Mischpolymerisat mit einem Schmelzpunkt im Bereich von 70 bis 90 °C, |
| 2,48 Gew. TI. | kolloidales Siliciumdioxid mit einer durchschnittlichen Partikelgröße im Bereich von 10 bis 20 nm, |
| 0,50 Gew. TI. | oxidiertes Polyethylen, |
| 0,10 Gew. TI. | Polysiloxan, |
| 0,10 Gew. TI. | Entschäumer |
| 0,40 Gew. TI. | langkettiger Alkohol |
| 0,40 Gew. TI. | Ammonium-Zirkonium-Carbonat und |
| 0,10 Gew. TI. | organischer Korrosionsinhibitor auf der Basis von einem TPA-Amin-Komplex. |

### Erfindungsgemäßes Beispiel 19:

Legierungsverzinkte Stahlbleche wurden wie im Beispiel 1 beschrieben mit der nachfolgenden Behandlungsflüssigkeit behandelt, getrocknet und geprüft:

| | |
|---|---|
| 100 Gew. TI. | Wasser, |
| 2,60 Gew. TI. | Acryl-Polyester-Polyurethan-Mischpolymerisat, |
| 1,70 Gew. TI. | Styrolacrylat, |
| 2,60 Gew. TI. | Ethylen-Acryl-Mischpolymerisat mit einem Schmelzpunkt im Bereich von 70 bis 90 °C, |
| 1,40 Gew. TI. | kolloidales Siliciumdioxid mit einer durchschnittlichen Partikelgröße im Bereich von 10 bis 20 nm, |
| 0,50 Gew. TI. | oxidiertes Polyethylen, |
| 0,10 Gew. TI. | Polysiloxan, |
| 0,10 Gew. TI. | Entschäumer |
| 0,40 Gew. TI. | langkettiger Alkohol |
| 0,40 Gew. TI. | Ammonium-Zirkonium-Carbonat, |
| 0,10 Gew. TI. | organischer Korrosionsinhibitor auf der Basis von einem TPA-Amin-Komplex und |
| 0,10 Gew. TI. | Ammoniumbichromat. |

### Erfindungsgemäßes Beispiel 20:

Legierungsverzinkte Stahlbleche wurden wie im Beispiel 1 beschrieben mit der nachfolgenden Behandlungsflüssigkeit behandelt, getrocknet und geprüft:

| | |
|---|---|
| 100 Gew. TI. | Wasser, |
| 2,53 Gew. TI. | Acryl-Polyester-Polyurethan-Mischpolymerisat, |
| 1,70 Gew. TI. | Styrolacrylat, |
| 2,53 Gew. TI. | Ethylen-Acryl-Mischpolymerisat mit einem Schmelzpunkt im Bereich von 70 bis 90 °C, |
| 1,40 Gew. TI. | kolloidales Siliciumdioxid mit einer durchschnittlichen |
| | Partikelgröße im Bereich von 10 bis 20 nm, |
| 0,50 Gew. TI. | oxidiertes Polyethylen, |
| 0,10 Gew. TI. | Polysiloxan, |
| 0,10 Gew. TI. | Entschäumer |
| 0,40 Gew. TI. | langkettiger Alkohol |
| 0,40 Gew. TI. | Ammonium-Zirkonium-Carbonat, |
| 0,10 Gew. TI. | organischer Korrosionsinhibitor auf der Basis von einem TPA-Amin-Komplex und |
| 0,24 Gew. TI. | Ammoniumbichromat. |

### Vergleichsbeispiel 1:

Legierungsverzinkte Stahlbleche wurden wie im Beispiel 1 beschrieben mit der nachfolgenden Zusammensetzung behandelt, getrocknet und geprüft:

| | |
|---|---|
| 100 Gew. TI. | Wasser, |
| 4,40 Gew. TI. | Acryl-Polyester-Polyurethan-Mischpolymerisat, |
| 4,50 Gew. TI. | Styrolacrylat, |
| 0,50 Gew. TI. | oxidiertes Polyethylen, |
| 0,10 Gew. TI. | Polysiloxan, |
| 0,10 Gew. TI. | Entschäumer und |
| 0,40 Gew. TI. | langkettiger Alkohol. |

### Vergleichsbeispiel 2:

Legierungsverzinkte Stahlbleche wurden wie im Beispiel 1 beschrieben mit der nachfolgenden Zusammensetzung behandelt, getrocknet und geprüft:

| | |
|---|---|
| 100 Gew. TI. | Wasser, |
| 4,28 Gew. TI. | Acryl-Polyester-Polyurethan-Mischpolymerisat, |
| 4,38 Gew. TI. | Styrolacrylat, |
| 0,50 Gew. TI. | oxidiertes Polyethylen, |
| 0,10 Gew. TI. | Polysiloxan, |
| 0,10 Gew. TI. | Entschäumer und |
| 0,40 Gew. TI. | langkettiger Alkohol. |
| 0,24 Gew. TI. | Ammoniumbichromat. |

### Vergleichsbeispiel 3:

Legierungsverzinkte Stahlbleche wurden wie im Beispiel 1 beschrieben mit der nachfolgenden Zusammensetzung behandelt, getrocknet und geprüft:

| | |
|---|---|
| 100 Gew. TI. | Wasser, |
| 2,74 Gew. TI. | Acryl-Polyester-Polyurethan-Mischpolymerisat, |
| 1,89 Gew. TI. | Styrolacrylat, |
| 2,74 Gew. TI. | Ethylen-Acryl-Mischpolymerisat mit einem Schmelzpunkt im Bereich von 70 bis 90 °C, |
| 1,47 Gew. TI. | kolloidales Siliciumdioxid mit einer durchschnittlichen Partikelgröße im Bereich von 10 bis 20 nm, |
| 0,11 Gew. TI. | Polysiloxan, |
| 0,11 Gew. TI. | Entschäumer |
| 0,42 Gew. TI. | langkettiger Alkohol |
| 0,42 Gew. TI. | Ammonium-Zirkonium-Carbonat, |
| 0,11 Gew. TI. | organischer Korrosionsinhibitor auf der Basis von einem TPA-Amin-Komplex und |

Somit entspricht diese Zusammensetzung der von Beispiel 11, wenn von dem fehlenden Gehalt an Wachs abgesehen wird.

### Vergleichsbeispiel 4:

Auf Basis Galvalume^{®} legierungsverzinkte Stahlbleche wurden ohne nachfolgende Behandlung zum Vergleich mit den erfindungsgemäßen Beispielen 1 bis 20 eingesetzt.

### Ergebnisse der Prüfungen an Galvalume^{®}-Blechen:

Die Trockenschichtauflage der getrockneten, verfilmten, ausgehärteten und ggf. auch thermisch ausgehärteten Polymer-haltigen Beschichtungen ergab bei allen Versuchen - außer bei Vergleichsbeispiel 4 - jeweils Werte im Bereich von 900 bis 1100 mg/m². Die getrockneten Filme wiesen eine Schichtdicke im Bereich von 0,8 bis 1 µm auf. Alle erfindungsgemäßen Beschichtungen mit Ausnahme des Beispiels 1 waren durchsichtig, farblos und zeigten einen leichten Seidenglanz, so daß der optische Charakter der metallischen Oberfläche praktisch unverändert erkennbar blieb. Beim Beispiel 1 war die Beschichtung milchig-weiß mit einem stärkeren Mattierungseffekt.

**Tabelle 1: Ergebnisse der Korrosionsschutzprüfungen**

| | Salzsprühtest ASTM B117-73 Flächenkorrosion nach 480 h in % | Salzsprühtest ASTM B117-73 Kanten- korrosion nach 480 h in mm | Schwitzwasser-Konstantklima-Test DIN 50 017 KK Flächenkorrosion nach > 1680 h in % | Stapeltest Flächenkorrosion nach 28 Tagen in % | Stapeltest Kantenkorrosion nach 28 Tagen in mm |
|---|---|---|---|---|---|
| B 1 | <50 | 30 | 20 | 100 | vollständig korrodiert |
| B 2 | 40 | 30 | 20 | 100 | vollständig korrodiert |
| B 3 | 40 | 30 | 20 | 100 | vollständig korrodiert |
| B 4 | 20 | 20 | 0 | 50 | vollständig korrodiert |
| B 5 | 20 | 20 | 0 | 40 | 20 |
| B 6 | 20 | 20 | 0 | 40 | 20 |
| B 7 | 20 | 20 | 0 | 40 | 20 |
| B 8 | 15 | 20 | 0 | 30 | 20 |
| B 9 | 5 | 30 | 0 | 0 | 5 |
| B 10 | 20 | 20 | 0 | 30 | 5 |
| B 11 | 0 | 12 | 0 | 0 | 2 |
| B 12 | 0 | 12 | 0 | 0 | 2 |
| B 13 | 0 | 12 | 0 | 0 | 2 |
| VB 14 | 100 | vollständig korrodiert | 0 | 30 | vollständig korrodiert |
| B 15 | 5 | 16 | 0 | 30 | 5 |
| B 16 | 0 | 12 | 0 | 0 | 2 |
| B 17 | 5 | 16 | 0 | 10 | 5 |
| B 18 | 20 | 16 | 0 | 20 | 5 |
| B 19 | 0 | 12 | 0 | 0 | 0 |
| B 20 | 0 | 12 | 0 | 0 | 0 |
| VB 1 | 90 | 30 | 20 | 100 | vollständig korrodiert |
| VB 2 | 0 | 20 | 0 | 0 | 0 |
| VB 3 | 0 | 12 | 0 | 0 | 2 |
| VB 4 | 100 | vollständig korrodiert | 100 | 100 | vollständig korrodiert |

Bei Vergleichsbeispiel 14 und den erfindungsgemäßen Beispielen 15 bis 18 wurde der Gehalt an kolloidalem Siliciumdioxid von Null kontinuierlich gesteigert. Es zeigte sich bei den Korrosionstests, daß ein Gehalt von etwa 1,46 Gew. Teilen an kolloidalem Siliciumdioxid bei Beispiel 16 für diese Testserie den besten Korrosionsschutz ergab (Tabelle 1).

Mit der Zusammensetzung des Beispiels 16 wurden Galvalume^{®}-Bleche mit einer Schichtdicke der getrockneten erfindungsgemäßen Beschichtung von etwa 1 g/m² beschichtet und bei unterschiedlichen Temperaturen getrocknet. Diese Bleche wurden dann einem Salzsprühtest nach ASTM B 117-73 unterworfen (Tabelle 2).

**Tabelle 2: Ergebnisse zu Beispiel 16 an bei unterschiedlicher Temperatur getrockneten Galvalume^{®}-Blechen**

| Trokkentemperatur | Salzsprühtest ASTM B 117-73 Flächenkorrosion nach 72 h in % | Salzsprühtest ASTM B 117-73 Flächenkorrosion nach 240 h in % | Salzsprühtest ASTM B 117-73 Flächenkorrosion nach 480 h in % | Salzsprühtest ASTM B 117-73 Flächenkorrosion nach 720 h in % |
|---|---|---|---|---|
| 20 °C | 0,5 | 10 | 10 | 10 |
| 40 °C | 0,5 | 10 | 10 | 10 |
| 60 °C | 0 | 2,5 | 5 | 5 |
| 80 °C | 0 | 0 | 0 | 5 |
| 100 °C | 0 | 0 | 0 | 2,5 |
| 120 °C | 0 | 0 | 0 | 2,5 |

Für Verfahrensvarianten beim besonders guten Beispiel 16 ergab sich, daß die Temperatur zum Trocknen der wässerigen Zusammensetzung auf dem Galvalume^{®}-Blech mindestens etwa 60 °C betragen sollte, um besonders gute Ergebnisse des Korrosionsschutzes zu erbringen. Mit erhöhter Temperatur wird eine bessere Filmbildung und Vernetzung erzielt.

**Tabelle 3: Ergebnisse der mechanischen Prüfungen**

| | Pendelhärte nach König, nach DIN 53 157 | Dombiegetest mit konischem Dorn von 3,2 mm bis 38 mm Durchmesser, nach DIN ISO 6860 | Näpfchenzugtest nach Erichsen |
|---|---|---|---|
| B 1 | 60 | Risse < 1,5 mm | unbeeinträchtigt |
| B 2 | 80 | Risse < 1,5 mm | unbeeinträchtigt |
| B 3 | 60 | keine Risse | unbeeinträchtigt |
| B 4 | 60 | keine Risse | unbeeinträchtigt |
| B 5 | 60 | keine Risse | unbeeinträchtigt |
| B 6 | 60 | keine Risse | unbeeinträchtigt |
| B 7 | 70 | keine Risse | unbeeinträchtigt |
| B 8 | 80 | keine Risse | unbeeinträchtigt |
| B 9 | 120 | keine Risse | unbeeinträchtigt |
| B 10 | 60 | keine Risse | unbeeinträchtigt |
| B 11 | 60 | keine Risse | unbeeinträchtigt |
| B 12 | 60 | keine Risse | unbeeinträchtigt |
| B 13 | 80 | keine Risse | unbeeinträchtigt |
| VB14 | 40 | keine Risse | unbeeinträchtigt |
| B 15 | 50 | keine Risse | unbeeinträchtigt |
| B 16 | 60 | keine Risse | unbeeinträchtigt |
| B 17 | 60 | keine Risse | unbeeinträchtigt |
| B 18 | 60 | keine Risse | unbeeinträchtigt |
| B 19 | 60 | keine Risse | unbeeinträchtigt |
| B 20 | 60 | keine Risse | unbeeinträchtigt |
| VB 1 | 60 | keine Risse | unbeeinträchtigt |
| VB 2 | 60 | keine Risse | unbeeinträchtigt |
| VB 3 | 60 | keine Risse | gerissen, Abrieb |
| VB 4 | nicht anwendbar | nicht anwendbar | gerissen, Abrieb: schlechter als VB 3 |

Die kleinsten Werte der Korrosionstests der Tabellen 1 und 2 geben die besten Resultate wieder. Auch die Ergebnisse der Tests der Tabelle 3 zeigen zwischen den verschiedenen polymeren Beschichtungen deutliche Unterschiede, vor allem beim Stapeltest. Die besten erfindungsgemäßen Beschichtungen sind bezüglich der Korrosionsbeständigkeit auf Flächen den chromathaltigen Beschichtungen zumindest ebenbürtig. Falls jedoch den erfindungsgemäßen Beschichtungen auch Chromat zugesetzt werden sollte, kann auch die Kantenkorrosion den bisher bekannten chromathaltigen Produkten als mindestens ebenbürtig angesehen werden.

Der sog. Stapeltest kann u.a. der Prüfung auf Rostbildung dienen. Mit diesem Kurzzeit-Test läßt sich der Korrosionsschutz z.B. von behandelten Bandoberflächen bezüglich des Einflusses von feuchtwarmer Atmosphäre beurteilen, wie sie z.B. bei Lagerung oder Transport durch verschiedene Klimazonen eines aufgewickelten Bandes (= Coil) auftreten kann. Hierfür werden jeweils 8 oder 10 beidseitig mit der Behandlungsflüssigkeit behandelte und getrocknete Prüfbleche z.B. im Format 80 x 80 mm mit einer Schlagschere geschnitten. Die Schnittkanten bleiben ungeschützt und unbehandelt. Die Bleche müssen plan sein und werden horizontal und so gestapelt, daß der Grat der Schnittkanten in eine Richtung zeigt. Zwischen die Bleche wird mittels einer Bürette 1 ml VE-Wasser je 100 cm² Oberfläche auf die jeweilige Substratoberfläche aufgebracht. Der Blechstapel wird dann in PE-Folie wasserdicht verpackt und verschweißt, so daß das VE-Wasser während der Prüfung nicht verdunsten bzw. entweichen kann. Der derart verpackte Blechstapel wird in eine Prüfkammer nach DIN 50 017 KK über eine Prüfzeit von 4 Wochen eingelagert. Danach wird beurteilt, welche Art von Rost (Rotrost, Schwarzrost, Weißrost) sich im Kantenbereich entwickelt hat und welcher prozentuale Flächenanteil her hiervon betroffen ist. Außerdem wird beurteilt, welche Art von Rost sich über die gesamte Oberfläche entwickelt hat und wie groß der prozentuale korrodierte Flächenanteil auf der behandelten Blechoberfläche ist. Galvalume^{®}-Bleche korrodieren hierbei zunächst weiß bzw. schwarz und - wenn die Aluminium-Zink-Legierungsbeschichtung aufgebraucht bzw. bis auf das Stahlblech beschädigt ist - vergleichbar mit Stahl rot.

Die Pendelhärte wurde über jeweils 5 Meßwerte gemittelt, wobei die Werte entsprechend auf- bzw. abgerundet wurden. Je niedriger die Pendelhärte ist, desto weicher ist der Film und üblicherweise ist dann auch die Haftung des Films auf der metallischen Oberfläche besser. Andererseits sind Gitterschnittergebnisse, die die Adhäsion charakterisieren könnten, bei derart dünnen Filmen nicht besonders aussagekräftig. Beim Vergleichsbeispiel 14 in Zusammenhang mit den Beispielen 15 bis 18 zeigt sich eine Härtezunahme aufgrund einer Zugabe von SiO₂-Partikeln.

Die zähelastischen Eigenschaften der erfindungsgemäßen Beschichtung wurden so eingestellt, daß die Beschichtung weder zu weich, noch zu hart für den mechanischen Angriff der Werkzeuge während der Umformung ist. Dadurch bleibt eine weitgehend unbeschädigte Beschichtung nach der Umformung erhalten. Außerdem werden die Schnittkanten durch diese zähelastischen Eigenschaften relativ gut geschützt, da die Beschichtung an den Schnittkanten nicht splittert und teilweise sogar auf die Schnittkante aufgezogen wird und dadurch einen erhöhten Kantenschutz erzielt. Ein Splittern der erfindungsgemäßen Beschichtung während der Herstellung von Blechabschnitten würde eine Verschmutzung der Formwerkzeuge verursachen, die zu unerwünschten Markierungen während der auf die Formgebung folgenden Prozeßschritte auf den Blechoberflächen führen kann. Aufgrund des optimierten zähelastischen Verhaltens ist überraschenderweise ein Gleit- und ein Reibverhalten erzielt worden, das keine anfänglich sehr niedrigen Werte und dann einen sehr schnellen Anstieg der Gleit- und Reibwerte ergibt, sondern außerordentlich lange niedrige Werte des Gleitens und Reibens während unterschiedlicher Umform-Folgeprozesse ermöglicht.

Der Dornbiegetest belegt die gute Flexibilität und die gute Haftung der Beschichtung zum metallischen Untergrund sowie ihre hervorragende Umformbarkeit.

Das Umformen erfolgte mit einer Näpfchenzugmaschine der Fa. Erichsen, Modell 142-20, mit einer Niederhaltekraft von 2500 kp und mit einer Ziehkraft von 2 Mp. Aus den erfindungsgemäß behandelten Blechabschnitten aus Galvalume^{®} wurden Ronden von 60 mm Durchmesser ausgestanzt, die zu hutförmigen Näpfchen mit Krempe meistens ca. 15 bis 17 mm tief und mit einem Näpfchendurchmesser von ca. 35 mm gezogen wurden. In den Bereichen der lnnenradien der Näpfchen trat ohne Zusatz eines Gleit- oder/und Umformmittels wie Wachs eine Beschädigung der Aluminium-Zink-Blume auf, teilweise mit einem extrem starken metallischen Abrieb. Durch einen ggf. auch nur geringen Zusatz eines Gleit- oder/und Umformmittels wurde diese Oberflächenbeschädigung vermieden und die Krempe (Ronde) auf Durchmesser im Bereich von etwa 48 mm zusammengezogen. Ohne den Zusatz eines Gleit- oder/und Umformmittels wurde das Umformen beeinträchtigt, indem die Krempe (Ronde) in geringerer Weise als mit diesem Zusatz ihren Durchmesser verringerte, etwa auf Durchmesser nur im Bereich von etwa 58 mm. Dieser Durchmesser ist teilweise auch vom Zeitpunkt des Auftretens eines Risses und der damit verbundenen Maschinenabschaltung abhängig. Die Näpfchen waren dann meistens nur 5 bis 10 mm tief gezogen worden. Zusätzlich trat ohne Zusatz eines Gleit- oder/und Umformmittels immer ein meist längerer Riß im Bereich des Außenradius des Näpfchens auf, wodurch sich die mittlere tiefgezogene Fläche des Näpfchens wie bei einer teilweise geöffneten Dose steil stehend nach einer Seite hin abhob. Beim Vergleichsbeispiel 14 in Zusammenhang mit den Beispielen 15 bis 18 zeigte sich kein Unterschied in der visuellen Ausprägung der gezogenen Näpfchen bezüglich des großen Außendurchmessers, der Formausbildung und der Oberflächenausbildung. Auch ein Benetzen der Oberfläche mit einer Kupfersulfatlösung, so daß sich auf Fehlstellen in der organischen Beschichtung aufgrund der Reaktion der Zinkbeschichtung mit dem Kupfersulfat ein rotbraun bis schwarz gefärbte Reaktionsoberfläche ausbilden konnte, zeigte keine Unterschiede zwischen Näpfchen mit unterschiedlichem SiO₂-Partikelgehalt an. Die guten Umformeigenschaften scheinen daher von dem Gehalt an organischer Substanz, insbesondere vom oxidierten Polyethylen, zu stammen und werden durch den Gehalt an anorganischen Partikeln positiv beeinflußt.

Bleche, wie sie in dem erfindungsgemäßen Beispiel 11 beschichtet wurden, wurden bei unterschiedlicher Temperatur PMT, nämlich bei Raumtemperatur über 72 Stunden, bei 40 °C, 60 °C, 80 °C, 100 °C oder 120 °C über jeweils 5 Minuten und danach über mindestens 70 Stunden bei Raumtemperatur weitergetrocknet. Es zeigte sich kein Unterschied in der visuellen Ausprägung der gezogenen Näpfchen bezüglich des großen Außendurchmessers, der Formausbildung und der Oberflächenausbildung, auch nicht nach Benetzen mit Kupfersulfat. Allerdings zeigte sich beim Salzsprühtest, daß bei den entsprechend dem erfindungsgemäßen Beispiel 11 behandelten Substratabschnitten, die bei einer Temperatur von 20°C, 40 °C oder 60 °C getrocknet wurden, nur ein befriedigender, aber mit steigender Temperatur besserer Korrosionsschutz erreichbar war. Die mit dem erfindungsgemäßen Beispiel 11 behandelten Substratabschitte, die bei einer von Temperatur 80 °C, 100 °C oder 120 °C getrocknet wurden, zeigten einen guten, mit steigender Temperatur sogar einen sehr guten Korrosionsschutz.

Es wird erwartet, daß die an Galvalume^{®}-Blechen ausgeführten Versuche und ermittelten Ergebnisse auf Bleche, die mit AlSi-, ZnAl-, ZnFe-, ZnNi-, Al und Zn-Beschichtungen versehen sind, ohne Änderung der Verfahrensparameter übertragbar sind und zu nahezu gleichartigen Ergebnissen führen.

### B) Behandlung von kaltgewalztem Stahl (CRS):

Bei den erfindungsgemäßen Beispielen 21 bis 28 und unter Bezug auf die Vergleichsbeispiele 5 bis 8 wird im folgenden eingegangen auf
1. den steigenden Anteil des organischen Korrosionsinhibitors (Beispiele 21 bis 25),
2. die Beispiele 26 und 28 für Styrol-Butadien-Mischpolymerisate als Filmbildner,
3. die Beispiele 27 und 28 für Epoxid-Mischpolymerisate als Filmbildner,
4. die Vergleichsbeispiele 5 bis 8 für Stahl im unbehandelten; beölten, alkaliphosphatierten oder zinkphosphatierten Zustand.

Die nachfolgenden Beispiele 21 bis 28 sind im Vergleich zu den Beispielen 1 bis 20 an Galvalume^{®}-Blechen speziell zur Vorbehandlung vor dem Lackieren bzw. zur Behandlung jeweils von kaltgewalztem Stahl (CRS) gedacht. Ziel ist es, im Vergleich zu der bisher üblichen Beölung der Stahloberflächen als temporärem Korrosionsschutz eine korrosionsschützend vorbehandelte Stahloberfläche einzusetzen, die anders als der Ölfilm vor der nachfolgenden Lackierung nicht mehr entfernt werden muß und dadurch ggf. erhebliche Vorteile bezüglich der Umweltbelastung bringt: Die Entsorgung des Korrosionsschutzöles aus den Reinigerbädem, die üblicherweise vor der nachfolgenden Lackierung im Einsatz sind, entfällt dadurch weitgehend oder vollständig, falls nicht auch bisher schon auf diese Reinigungsprozesse vollständig verzichtet werden konnte, weil die Oberflächen während des Transports, der Lagerung oder/und der Weiterverarbeitung der metallischen Substrate nicht verschmutzt wurden oder/und nicht beölt wurden.

Das erfindungsgemäße Verfahren ist als Primer-integrierte Vorbehandlung zur Herstellung von lackierten Oberflächen aus kaltgewalztem Stahl von wirtschaftlicher Bedeutung: Erfindungsgemäß wird eine korrosionsschützende Behandlung der Stahloberfläche vorgeschlagen, die zunächst während Transport, Lagerung und Weiterverarbeitung der Stahloberfläche einen Korrosionsschutz bietet und anschließend ein Teil der Gesamtlackierung ist. Damit ist es gelungen, einen Pretreatment-Primer für Stahl zu entwickeln.

### Erfindungsgemäßes Beispiel 21:

Stahlbleche, die aus handelsüblichem kaltgewalzten Stahlband der Güteklasse ST 1405 erhalten wurden, die zum Zwecke des Schutzes bei der Lagerung beölt waren, wurden zunächst in einem alkalischen Spritzreiniger entfettet, mit Wasser gespült, bei erhöhter Temperatur getrocknet und anschließend mit der erfindungsgemäßen wässerigen Zusammensetzung behandelt. Dabei wurde eine definierte Menge der wässerigen Zusammensetzung (Badlösung) mit Hilfe eines Rollcoaters so aufgetragen, daß sich eine Naßfilmdicke von ca. 10 ml/m² ergab. Anschließend wurde der Naßfilm bei einer Temperatur im Bereich von 80 bis 100 °C PMT aufgetrocknet, verfilmt und ausgehärtet. Die Badlösung bestand aus:

| | |
|---|---|
| 100 Gew. TI. | Wasser, |
| 2,70 Gew. Tl. | Acryl-Polyester-Polyurethan-Mischpolymerisat, |
| 2,00 Gew. Tl. | Styrolacrylat, |
| 2,70 Gew. Tl. | Ethylen-Acryl-Mischpolymerisat mit einem Schmelzpunkt im Bereich von 70 bis 90°C, |
| 1,40 Gew. Tl. | kolloidales Siliciumdioxid mit einer durchschnittlichen Partikelgröße im Bereich von 10 bis 20 nm, |
| 0,10 Gew. TI. | Polysiloxan, |
| 0,10 Gew. TI. | Entschäumer, |
| 0,40 Gew. TI. | langkettiger Alkohol und |
| 0,10 Gew. TI. | organischer Korrosionsinhibitor auf der Basis von einem TPA-Amin-Komplex. |

### Erfindungsgemäßes Beispiel 22:

Stahlbleche wurden wie im Beispiel 21 beschrieben mit der nachfolgenden Behandlungsflüssigkeit behandelt, getrocknet und geprüft:

| | |
|---|---|
| 100 Gew. TI. | Wasser, |
| 2,70 Gew. TI. | Acryl-Polyester-Polyurethan-Mischpolymerisat, |
| 1,90 Gew. TI. | Styrolacrylat, |
| 2,65 Gew. TI. | Ethylen-Acryl-Mischpolymerisat mit einem Schmelzpunkt im Bereich von 70 bis 90 °C, |
| 1,37 Gew. Tl. | kolloidales Siliciumdioxid mit einer durchschnittlichen Partikelgröße im Bereich von 10 bis 20 nm, |
| 0,50 Gew. Tl. | oxidiertes Polyethylen, |
| 0,10 Gew. Tl. | Polysiloxan, |
| 0,10 Gew. Tl. | Entschäumer, |
| 0,40 Gew. Tl. | langkettiger Alkohol und |
| 0,28 Gew. Tl. | organischer Korrosionsinhibitor auf der Basis von einem TPA-Amin-Komplex. |

### Erfindungsgemäßes Beispiel 23:

Stahlbleche wurden wie im Beispiel 21 beschrieben mit der nachfolgenden Behandlungsflüssigkeit behandelt, getrocknet und geprüft:

| | |
|---|---|
| 100 Gew. Tl. | Wasser, |
| 2,65 Gew. Tl. | Acryl-Polyester-Polyurethan-Mischpolymerisat, |
| 1,60 Gew. TI. | Styrolacrylat, |
| 2,65 Gew. TI. | Ethylen-Acryl-Mischpolymerisat mit einem Schmelzpunkt im Bereich von 70 bis 90 °C, |
| 1,32 Gew. Tl. | kolloidales Siliciumdioxid mit einer durchschnittlichen Partikelgröße im Bereich von 10 bis 20 nm, |
| 0,50 Gew. Tl. | oxidiertes Polyethylen, |
| 0,10 Gew. Tl. | Polysiloxan, |
| 0,10 Gew. Tl. | Entschäumer, |
| 0,40 Gew. Tl. | langkettiger Alkohol und |
| 0,48 Gew. Tl. | organischer Korrosionsinhibitor auf der Basis von einem TPA-Amin-Komplex. |

### Erfindungsgemäßes Beispiel 24:

Stahlbleche wurden wie im Beispiel 21 beschrieben mit der nachfolgenden Behandlungsflüssigkeit behandelt, getrocknet und geprüft:

| | |
|---|---|
| 100 Gew. Tl. | Wasser, |
| 2,45 Gew. Tl. | Acryl-Polyester-Polyurethan-Mischpolymerisat, |
| 1,45 Gew. Tl. | Styrolacrylat, |
| 2,45 Gew. Tl. | Ethylen-Acryl-Mischpolymerisat mit einem Schmelzpunkt im Bereich von 70 bis 90 °C, |
| 1,27 Gew. Tl. | kolloidales Siliciumdioxid mit einer durchschnittlichen Partikelgröße im Bereich von 10 bis 20 nm, |
| 0,50 Gew. Tl. | oxidiertes Polyethylen, |
| 0,10 Gew. Tl. | Polysiloxan, |
| 0,10 Gew. Tl. | Entschäumer, |
| 0,40 Gew. Tl. | langkettiger Alkohol, |
| 0,40 Gew. Tl. | Ammonium-Zirkonium-Carbonat und |
| 0,68 Gew. Tl. | organischer Korrosionsinhibitor auf der Basis von einem TPA-Amin-Komplex. |

### Erfindungsgemäßes Beispiel 25:

Stahlbleche wurden wie im Beispiel 21 beschrieben mit der nachfolgenden Behandlungsflüssigkeit behandelt, getrocknet und geprüft:

| | |
|---|---|
| 100 Gew. Tl. | Wasser, |
| 2,55 Gew. Tl. | Acryl-Polyester-Polyurethan-Mischpolymerisat, |
| 1,70 Gew. Tl. | Styrolacrylat, |
| 2,55 Gew. Tl. | Ethylen-Acryl-Mischpolymerisat mit einem Schmelzpunkt im Bereich von 70 bis 90 °C, |
| 1,28 Gew. TI. | kolloidales Siliciumdioxid mit einer durchschnittlichen Partikelgröße im Bereich von 10 bis 20 nm, |
| 0,50 Gew. TI. | oxidiertes Polyethylen, |
| 0,10 Gew. TI. | Polysiloxan, |
| 0,10 Gew. TI. | Entschäumer, |
| 0,40 Gew. TI. | langkettiger Alkohol und |
| 0,88 Gew. TI. | organischer Korrosionsinhibitor auf der Basis von einem TPA-Amin-Komplex. |

### Erfindungsgemäßes Beispiel 26:

Stahlbleche wurden wie im Beispiel 21 beschrieben mit der nachfolgenden Behandlungsflüssigkeit behandelt, getrocknet und geprüft:

| | |
|---|---|
| 100 Gew. TI. | Wasser, |
| 4,25 Gew. TI. | Styrol-Butadien-Copolymerisat, carboxylgruppenhaltig, |
| 2,65 Gew. TI. | Ethylen-Acryl-Mischpolymerisat mit einem Schmelzpunkt im Bereich von 70 bis 90 °C, |
| 1,32 Gew. TI. | kolloidales Siliciumdioxid mit einer durchschnittlichen Partikelgröße im Bereich von 10 bis 20 nm, |
| 0,50 Gew. Tl. | oxidiertes Polyethylen, |
| 0,10 Gew. Tl. | Polysiloxan, |
| 0,10 Gew. TI. | Entschäumer, |
| 0,40 Gew. TI. | langkettiger Alkohol und |
| 0,48 Gew. TI. | organischer Korrosionsinhibitor auf der Basis von einem TPA-Amin-Komplex. |

### Erfindungsgemäßes Beispiel 27:

Stahlbleche wurden wie im Beispiel 21 beschrieben mit der nachfolgenden Behandlungsflüssigkeit behandelt, getrocknet und geprüft:

| | |
|---|---|
| 100 Gew. Tl. | Wasser, |
| 4,25 Gew. Tl. | Mischpolymerisat auf der Basis von Epoxid-Acrylat, |
| 2,65 Gew. Tl. | Ethylen-Acryl-Mischpolymerisat mit einem Schmelzpunkt im Bereich von 70 bis 90 °C, |
| 1,32 Gew. Tl. | kolloidales Siliciumdioxid mit einer durchschnittlichen Partikelgröße im Bereich von 10 bis 20 nm, |
| 0,50 Gew. TI. | oxidiertes Polyethylen, |
| 0,10 Gew. TI. | Polysiloxan, |
| 0,10 Gew. TI. | Entschäumer, |
| 0,40 Gew. TI. | langkettiger Alkohol und |
| 0,48 Gew. TI. | organischer Korrosionsinhibitor auf der Basis von einem TPA-Amin-Komplex. |

### Erfindungsgemäßes Beispiel 28:

Stahlbleche wurden wie im Beispiel 21 beschrieben mit der nachfolgenden Behandlungsflüssigkeit behandelt, getrocknet und geprüft:

| | |
|---|---|
| 100 Gew. Tl. | Wasser, |
| 2,15 Gew. Tl. | Styrol-Butadien-Copolymerisat, carboxylgruppenhaltig, |
| 2,10 Gew. TI. | Mischpolymerisat auf der Basis von Epoxid-Acrylat, |
| 2,65 Gew. Tl. | Ethylen-Acryl-Mischpolymerisat mit einem Schmelzpunkt im Bereich von 70 bis 90 °C, |
| 1,32 Gew. TI. | kolloidales Siliciumdioxid mit einer durchschnittlichen Partikelgröße im Bereich von 10 bis 20 nm, |
| 0,50 Gew. Tl. | oxidiertes Polyethylen, |
| 0,10 Gew. Tl. | Polysiloxan, |
| 0,10 Gew. Tl. | Entschäumer, |
| 0,40 Gew. Tl. | langkettiger Alkohol und |
| 0,48 Gew. Tl. | organischer Korrosionsinhibitor auf der Basis von einem TPA-Amin-Komplex. |

### Vergleichsbeispiel 5:

Stahlbleche der Güteklasse ST 1405 ohne korrosionsschützende Behandlung wurden einem Schwitzwasser-Wechselklimatest nach DIN 50 017 KFW unterworfen (siehe Tabelle 4).

### Vergleichsbeispiel 6:

Stahlbleche der Güteklasse ST 1405 wurden mit einer handelsüblichen Walzwerkbeölung behandelt. Danach wurden sie einem Schwitzwasser-Wechselklimatest nach DIN 50 017 KFW unterworfen (siehe Tabelle 4).

### Vergleichsbeispiel 7:

Stahlbleche, die aus handelsüblichem kaltgewalzten Stahlband der Güteklasse ST 1405 erhalten wurden, die zum Zwecke des Schutzes bei der Lagerung beölt waren, wurden zunächst in einem alkalischen Spritzreiniger entfettet, mit Wasser gespült, bei erhöhter Temperatur getrocknet und anschließend mit der handelsüblichen Alkaliphosphatierung Unibond^{®} WH behandelt, wobei eine Schichtdicke von etwa 0,3 µm erzielt wurde. Danach wurden sie einem Schwitzwasser-Wechselklimatest nach DIN 50 017 KFW unterworfen (siehe Tabelle 4).

### Vergleichsbeispiel 8:

Stahlbleche, die aus handelsüblichem kaltgewalzten Stahlband z. B. der Güteklasse ST 1405 erhalten wurden, die zum Zwecke des Schutzes bei der Lagerung beölt waren, wurden zunächst in einem alkalischen Spritzreiniger entfettet, mit Wasser gespült, bei erhöhter Temperatur getrocknet und anschließend mit der handelsüblichen Trikationen-Zinkphosphatierung Gardobond^{®} 101 , wie sie in der Allgemeinindustrie im Einsatz ist, behandelt, wobei eine Schichtdicke von etwa 1,5 µm erzielt wurde. Danach wurden sie einem Schwitzwasser-Wechselklimatest nach DIN 50 017 KFW unterworfen (siehe Tabelle 4).

### Ergebnisse der Prüfungen an behandeltem, kaltgewalzten Stahl:

Die getrockneten und bei der Trocknung thermisch ausgehärteten Filme der erfindungsgemäßen Polymer-haltigen Beschichtungen zeigten eine Schichtdicke im Bereich von 0,8 bis 1 µm. Die Beschichtung der Vergleichsbeispiele 7 und 8 wies eine Dicke von etwa 0,3 bzw. 1,5 µm auf. Alle erfindungsgemäßen Beschichtungen waren durchsichtig, farblos und zeigten einen leichten Seidenglanz, so daß der optische Charakter der metallischen Oberfläche praktisch unverändert erkennbar blieb.

**Tabelle 4: Ergebnisse der Korrosionschutzprüfungen der Beispiele 21 bis 28 und der Vergleichsbeispiele 5 bis 8**

| Schwitzwasser Wechselklimatest nach DIN 50 017 KFW | Flächenkorrosion nach 1 Cyklus in % | Flächenkorrosion nach 3 Cyklen in % | Flächenkorrosion nach 5 Cyklen in % | Flächenkorrosion nach 7 Cyklen in % | Flächenkorrosion nach 10 Cyklen in % |
|---|---|---|---|---|---|
| B 21 | 0 | 0 | 5 | 15 | 20 |
| B 22 | 0 | 0 | 2 | 10 | 15 |
| B 23 | 0 | 0 | 0 | 2 | 5 |
| B 24 | 0 | 0 | 0 | 0 | 0 |
| B 25 | 0 | 0 | 0 | 0 | 0 |
| B 26 | 0 | 0 | 0 | 0 | 0 |
| B 27 | 0 | 0 | 0 | 0 | 0 |
| B 28 | 0 | 0 | 0 | 0 | 0 |
| VB 5 | 80 | 100 | entfällt | entfällt | entfällt |
| VB 6 | 5 | 20 | 30 | 40 | 60 |
| VB 7 | 30 | 70 | 100 | entfällt | entfällt |
| VB 8 | 20 | 30 | 60 | 100 | entfällt |

**Tabelle 5: Ergebnisse der mechanischen Prüfungen**

| | Pendelhärte nach König, nach DIN 53157 | Dornbiegetest mit konischem Dorn von 3,2 mm bis 38 mm Durchmesser, nach DIN ISO 6860 | Näpfchenzugtest nach Erichsen |
|---|---|---|---|
| B 21 | 60 | keine Risse | unbeeinträchtigt. |
| B 22 | 60 | keine Risse | unbeeinträchtigt |
| B 23 | 60 | keine Risse | unbeeinträchtigt |
| B 24 | 60 | keine Risse | unbeeinträchtigt |
| B 25 | 60 | keine Risse | unbeeinträchtigt |
| B 26 | 50 | keine Risse | unbeeinträchtigt |
| B 27 | 70 | keine Risse | unbeeinträchtigt |
| B 28 | 55 | keine Risse | unbeeinträchtigt |

Die Versuchsergebnisse an den erfindungsgemäßen Beispielen 21 bis 25 zeigen, daß ein erhöhter Anteil an Korrosionsinhibitor den Korrosionsschutz spürbar verbessert. Anhand der Beispiele 26 bis 28 wird deutlich, daß durch den Zusatz von Acrylat-Epoxid-Mischpolymerisat bzw. von Styrol-Butadien-Copolymerisat anstelle von Styrolacrylat bzw. Acryl-Polyester-Polyurethan-Mischpolymerisat eine verbesserte Haftung zum Untergrund und eine erhöhte Chemikalienbeständigkeit insbesondere gegen alkalische Stoffe erzielt wird. Hierbei zeigte sich, daß die Korrosionsbeständigkeit ab einem Mindestgehalt an mindestens einem Korrosioninhibitor gute bzw. gleichmäßig gute Ergebnisse ergibt. Die Beschichtungen der erfindungsgemäßen Beispiele 21 bis 28 sind hervorragend zur Umformung von kaltgewalztem Stahl geeignet. Die Vergleichsbeispiele 5 bis 8 brauchten hierbei nicht getestet zu werden, da deren Beschichtungen für Umformungen gänzlich ungeeignet sind.

Im Vergleich zur beölten Substratoberfläche ohne klassische Korrosionsschutzschicht (VB 6) sowie im Vergleich zur sogenannten nicht-schichtbildenden Vorbehandlungsschicht bzw. schichtbildenden Vorbehandlungsschicht wie z.B. durch Alkaliphosphatieren (VB 7) oder Zinkphosphatieren(VB 8), bei der die vorbehandelten Bleche anschließend überlakkiert werden, haben die erfindungsgemäßen Beschichtungen vor allem den Vorteil, daß an während der Lackierung schwer oder nur unzureichend zugänglichen Oberflächenbereichen ein durchaus ausreichender bis befriedigender Korrosionsschutz durch die erfindungsgemäße Schutzschicht sichergestellt werden kann, z.B., wenn Band erfindungsgemäß beschichtet und erst danach umgeformt wird und ggf. danach lackiert wird. Im Vergleich zur beölten Substratoberfläche ohne klassische Korrosionsschutzschicht sowie im Vergleich zur sogenannten nicht-schichtbildenden Vorbehandlungsschicht bzw. schichtbildenden Vorbehandlungsschicht wie z.B. durch Alkaliphpsphatieren oder Zinkphosphatieren, die überlackiert werden müssen, hat das erfindungsgemäße Verfahren weiterhin den Vorteil, auch ohne Lackierung einen befriedigenden Korrosionsschutz zu gewährleisten, z.B. bei Architekturblechen im Innenbereich oder in geschützten Bereichen ohne höhere Luftfeuchtigkeit z.B. verbaut unter dem Dach

Die Beschichtungen entsprechend den Beispielen 21 bis 28 sind als Vorbehandlungsschicht vor dem Lackieren oder als Behandlungsschicht von kaltgewalztem Stahl (CRS) gut geeignet, der nach einer entsprechenden Lagerzeit zu Formteilen weiterverarbeitet und anschließend lackiert wird oder der zu Komponenten ohne nachfolgende Lackierung im Innenbereich verarbeitet wird und daher nicht der durch Freibewitterung üblichen Beanspruchung ausgesetzt wird.

Die Beschichtung entsprechend der erfindungsgemäßen Beispiele 26 bis 28 ist bedingt durch die Kunstharzkombination mit einem hohen Anteil an Epoxid-Acrylat-Mischpolymerisat bzw. Sytrol-Butadien-Copolymerisat im Außenbereich nur als Vorbehandlung vor einer nachfolgenden Lackierung geeignet und nicht als dauerhafter Blankkorrosionsschutz im Außenbereich, da diese Beschichtung nicht ausreichend gegen die UV-Strahlungsbelastung beständig ist, wie sie während einer Freibewitterung einwirkt. Im Innenbereich können diese Beschichtungen nur bei sehr geringer Luftfeuchtigkeit als Behandlung ohne nachfolgenden Lack eingesetzt werden.

Es ist erstaunlich, daß es für den Einsatz auf besonders korrosionsempfindlichen Oberflächen wie z.B. Stahl gelang, eine Polymer-haltige Beschichtung zu entwickeln, die auf wässeriger Basis ist, die frei von oder relativ arm an organischen Lösemitteln ist, die bei niedriger Temperatur - unter 120 °C PMT, insbesondere im Bereich von 60 bis 80 °C PMT - und schnell - bei Bandanlagen innerhalb einer Zeit von 1 bis 3 s bzw. bei Teilebeschichtung durch Tauchen wegen der Ablaufkanten in einer Zeit von 5 bis 10 Minuten, bei Sprühen von Teilen in einer Zeit bis zu 5 Minuten - trocknen, verfilmen und üblicherweise zumindest teilweise vernetzen kann und trotzdem eine gute Korrosionsbeständigkeit gewährleistet. Vorzugsweise sollen derartige erfindungsgemäße Beschichtungen auf Stahl ein Schichtgewicht von 0,8 bis 2 g/m², entsprechend einer Schichtdicke im Bereich etwa von 0,7 bis 2,5 µm, aufweisen.

### C) Behandlung bzw. Vorbehandlung von Magnesiumgußteilen:

### Erfindungsgemäßes Beispiel 29:

Gußteile in Form von ca. 5 mm dicken Platten aus den Magnesiumlegierungen AZ91D und AM50A auf Basis von MgAIZn bzw. MgAIMn wurden zunächst in einem alkalischen Spritzreiniger entfettet, mit Wasser gespült, bei erhöhter Temperatur getrocknet und anschließend mit der erfindungsgemäßen wässerigen Zusammensetzung behandelt. Dabei wurde eine Menge der wässerigen Zusammensetzung (Badlösung) durch Eintauchen in die Behandlungsflüssigkeit aufgetragen, so daß sich eine durchschnittliche Naßfilmdicke von ca. 1 bis 1,5 ml/m² ergab. Anschließend wurde der Naßfilm bei einer Temperatur im Bereich von 80 bis 100 °C PMT aufgetrocknet, verfilmt und ausgehärtet. Die Badlösung bestand aus:

| | |
|---|---|
| 100 Gew. Tl. | Wasser, |
| 2,60 Gew. Tl. | Acryl-Polyester-Polyurethan-Mischpolymerisat, |
| 1,80 Gew. Tl. | Styrolacrylat, |
| 2,60 Gew. Tl. | Ethylen-Acryl-Mischpolymerisat mit einem Schmelzpunkt im Bereich von 70 bis 90 °C, |
| 1,40 Gew. TI. | kolloidales Siliciumdioxid mit einer durchschnittlichen Partikelgröße im Bereich von 10 bis 20 nm, |
| 0,50 Gew. TI. | oxidiertes Polyethylen, |
| 0,10 Gew. TI. | Polysiloxan, |
| 0,10 Gew. TI. | Entschäumer, |
| 0,40 Gew. TI. | langkettiger Alkohol, |
| 0,40 Gew. TI. | Ammonium-Zirkonium-Carbonat und |
| 0,10 Gew. TI. | organischer Korrosionsinhibitor auf der Basis von einem TPA-Amin-Komplex. |

### Vergleichsbeispiel 9:

Im Vergleich zu Beispiel 29 wurde die Zusammensetzung von Vergleichsbeispiel 2 entsprechend dem Verfahren von Beispiel 29 auf Platten der gleichartigen Magnesiumlegierungen aufgebracht.

### Ergebnisse der Prüfungen an Magnesiumgußteilen:

**Tabelle 6: Ergebnisse der Korrosionsschutzprüfungen**

| | Salzsprühtest ASTM B117-73 Flächenkorrosion nach 120 h in % | Salzsprühtest ASTM B117-73 Flächenkorrosion nach 240 h in % | Salzsprühtest ASTM B117-73 Flächenkorrosion nach 480 h in % | Salzsprühtest ASTM B117-73 Kanten- korrosion nach 480 h in mm | Schwitzwasser-Konstantklima-Test DIN 50 017 KK Flächenkorrosion nach 240 h in % |
|---|---|---|---|---|---|
| B 29 | 0 | 10 | 20 | 0 | 0 |
| VB 9 | 0 | 10 | 20 | 0 | 0 |

Die Pendelhärtebestimmung der erfindungsgemäßen Beschichtung ergab Werte von 60. Da Magnesiumlegierungen mit wenigen Ausnahmen nicht tiefziehfähig sind, konnte der Dombiegetest nicht durchgeführt werden. Die getrockneten und bei der Trocknung thermisch ausgehärteten Filme der erfindungsgemäßen Polymer-haltigen Beschichtungen zeigten eine durchschnittliche Schichtdicke von etwa 1,2 µm. Die Beschichtung des Vergleichsbeispiels 9 wies eine durchschnittliche Schichtdicke von etwa 1,2 µm auf. Die erfindungsgemäße Beschichtung war durchsichtig, farblos und zeigte einen leichten Seidenglanz, so daß der optische Charakter der metallischen Oberfläche praktisch unverändert erkennbar blieb. Die chromfreie erfindungsgemäße Beschichtung war einer Chrom- und Polymer-haltigen Beschichtung bezüglich der Korrosionsbeständigkeit gleichwertig.

## Patentansprüche

1. Verfahren zur Beschichtung einer metallischen Oberfläche, insbesondere von Aluminium, Eisen, Kupfer, Magnesium, Nickel, Titan, Zinn, Zink oder Aluminium, Eisen, Kupfer, Magnesium, Nickel, Titan, Zinn oder/und Zink enthaltenden Legierungen, mit einer wässerigen Zusammensetzung, die weitgehend oder gänzlich von Chrom(VI)-Verbindungen frei ist, zur Vorbehandlung vor einer weiteren Beschichtung oder zur Behandlung, bei der der zu beschichtende Körper ggf. - insbesondere ein Band oder Bandabschnitt - nach der Beschichtung umgeformt wird, **dadurch gekennzeichnet, daß** die Zusammensetzung neben Wasser
a) mindestens einen organischen Filmbildner, der mindestens ein wasserlösliches oder wasserdispergiertes Polymer mit einer Säurezahl im Bereich von 5 bis 200 enthält, auf der Basis von
Acryl-Polyester-Polyurethan-Mischpolymerisat,
Acryl-Polyester-Polyurethan-Styrol-Mischpolymerisat,
Ethylen-Acryl-Polyester-Polyurethan-Mischpolymerisat,
Ethylen-Acryl-Polyester-Polyurethan-Styrol-Mischpolymerisat,
Ethylen-Acryl-Mischpolymerisat,
Ethylen-Acryl-Styrol-Mischpolymerisat,
Polyesterharzen mit freien Carboxylgruppen kombiniert mit Melamin-Formaldehydharzen,
einem Mischpolymerisat auf der Basis von Acrylat und Styrol,
einem Mischpolymerisat auf der Basis von Styrolbutadien oder/und
einem Mischpolymerisat von Acrylat und Epoxid bzw. auf der Basis von einem Acryl-modifizierten Carboxylgruppen-haltigen Polyester zusammen mit Melamin-Formaldehyd und Ethylen-Acryl-Mischpolymerisat,
b) mindestens eine anorganische Verbindung in Partikelform mit einem mittleren Partikeldurchmesser gemessen an einem Rasterelektronenmikroskop im Bereich von 0,005 bis zu 0,3 µm Durchmesser,
c) mindestens ein Gleitmittel,
d) mindestens einen langkettigen Alkohol und
e) mindestens einen organischen Korrosionsinhibitor, mindestens ein Silan oder/und Siloxan berechnet als Silan oder/und mindestens ein Vernetzungsmittel insbesondere auf Basis einer basischen Verbindung sowie
f) ggf. mindestens ein organisches Lösemittel enthält,
wobei die saubere metallische Oberfläche mit der wässerigen Zusammensetzung in Kontakt gebracht und ein Partikel enthaltender Film auf der metallischen Oberfläche ausgebildet wird, der anschließend getrocknet wird und ggf. zusätzlich ausgehärtet wird,
wobei der getrocknete und ggf. auch ausgehärtete Film eine Schichtdicke im Bereich von 0,01 bis 10 µm aufweist, bestimmt durch Ablösen einer definierten Fläche des ausgehärteten Films und Auswiegen.

2. Verfahren nach Anspruch 1, **dadurch gekennzeichnet, daß** der organische Filmbildner in der Form einer Lösung, Dispersion, Emulsion, Mikroemulsion oder/und Suspension vorliegt.

3. Verfahren nach Anspruch 1 oder 2, **dadurch gekennzeichnet, daß** der organische Filmbildner mindestens ein Kunstharz ist, insbesondere ein Kunstharz auf Basis Acrylat, Ethylen, Polyester, Polyurethan, Siliconpolyester, Epoxid, Phenol, Styrol, Harnstoff-Formaldehyd, deren Derivate, Copolymere, Polymere, Mischungen oder/und Mischpolymerisate.

4. Verfahren nach einem der vorstehenden Ansprüche, **dadurch gekennzeichnet, daß** der organische Filmbildner ein Kunstharzgemisch oder/und Mischpolymerisat ist, das einen Gehalt an Kunstharz auf Basis Acrylat, Epoxid, Ethylen, Harnstoff-Formaldehyd, Phenol, Polyester, Polyurethan, Styrol oder/und Styrolbutadien enthält, aus dem während bzw. nach der Abgabe von Wasser und anderen flüchtigen Bestandteilen ein organischer Film ausbildet wird.

5. Verfahren nach einem der vorstehenden Ansprüche, **dadurch gekennzeichnet, daß** der organische Filmbildner Kunstharze oder/und Polymere bzw. Derivate, Copolymere, Polymere, Mischungen oder/und Mischpolymerisate auf der Basis von Acrylat, Epoxid, Phenol, Polyethylenimin, Polyurethan, Polyvinylalkohol, Polyvinylphenol, Polyvinylpyrrolidon oder/und Polyasparaginsäure, insbesondere Copolymere mit einer Phosphor enthaltenden Vinylverbindung, enthält.

6. Verfahren nach einem der vorstehenden Ansprüche, **dadurch gekennzeichnet, daß** die Molekulargewichte der Kunstharze, Copolymere, Polymere bzw. deren Derivate, Mischungen oder/und Mischpolymerisate im Bereich von mindestens 1000 u, vorzugsweise von mindestens 5000 u, besonders bevorzugt von 20.000 bis 200.000 u betragen.

7. Verfahren nach einem der vorstehenden Ansprüche, **dadurch gekennzeichnet, daß** der pH-Wert des organischen Filmbildners in einer wässerigen Zubereitung ohne Zugabe weiterer Verbindungen im Bereich von 1 bis 12 liegt.

8. Verfahren nach einem der vorstehenden Ansprüche, **dadurch gekennzeichnet, daß** der organische Filmbildner nur wasserlösliche Kunstharze oder/und Polymere enthält, insbesondere solche, die in Lösungen mit pH-Werten ≤ 5 stabil sind.

9. Verfahren nach einem der vorstehenden Ansprüche, **dadurch gekennzeichnet, daß** der organische Filmbildner Kunstharz oder/und Polymer enthält, die Carboxyl-Gruppen aufweisen.

10. Verfahren nach einem der vorstehenden Ansprüche, **dadurch gekennzeichnet, daß** die Säuregruppen der Kunstharze mit Ammoniak, mit Aminen wie z.B. Morpholin, Dimethylethanolamin, Diethylethanolamin oder Triethanolamin oder/und mit Alkalimetallverbindungen wie z.B. Natriumhydroxid stabilisiert sind.

11. Verfahren nach einem der vorstehenden Ansprüche, **dadurch gekennzeichnet, daß** die wässerige Zusammensetzung 0,1 bis 1000 g/L des organischen Filmbildners enthält, vorzugsweise 2 bis 600 g/L.

12. Verfahren nach einem der vorstehenden Ansprüche, **dadurch gekennzeichnet, daß** die wässerige Zusammensetzung mindestens ein teilhydrolysiertes oder gänzlich hydrolysiertes Silan enthält.

13. Verfahren nach einem der vorstehenden Ansprüche, **dadurch gekennzeichnet, daß** mindestens ein Aminosilan, ein Epoxysilan, ein Vinylsilan oder/und mindestens ein entsprechendes Siloxan enthalten ist.

14. Verfahren nach einem der vorstehenden Ansprüche, **dadurch gekennzeichnet, daß** der Gehalt an mindestens einem Silan oder/und Siloxan berechnet als Silan in der wässerigen Zusammensetzung vorzugsweise 0,1 bis 50 g/L beträgt.

15. Verfahren nach einem der vorstehenden Ansprüche, **dadurch gekennzeichnet, daß** als anorganische Verbindung in Partikelform ein feinverteiltes Pulver, eine Dispersion oder eine Suspension wie z.B. ein Carbonat, Oxid, Silicat oder Sulfat zugesetzt wird, insbesondere kolloidale oder/und amorphe Partikel.

16. Verfahren nach einem der vorstehenden Ansprüche, **dadurch gekennzeichnet, daß** als anorganische Verbindung in Partikelform Partikel mit einer mittleren Partikelgröße im Bereich von 8 nm bis 150 nm verwendet werden.

17. Verfahren nach einem der vorstehenden Ansprüche, **dadurch gekennzeichnet, daß** als anorganische Verbindung in Partikelform Partikel auf Basis von mindestens einer Verbindung des Aluminiums, Bariums, Cers, Kalziums, Lanthans, Siliciums, Titans, Yttriums, Zinks oder/und Zirkoniums zugesetzt werden.

18. Verfahren nach einem der vorstehenden Ansprüche, **dadurch gekennzeichnet, daß** als anorganische Verbindung in Partikelform Partikel auf Basis von Aluminiumoxid, Bariumsulfat, Cerdioxid, Siliciumdioxid, Silicat, Titanoxid, Yttriumoxid, Zinkoxid oder/und Zirkonoxid zugesetzt werden.

19. Verfahren nach einem der vorstehenden Ansprüche, **dadurch gekennzeichnet, daß** die wässerige Zusammensetzung 0,1 bis 500 g/L der mindestens einen anorganischen Verbindung in Partikelform enthält.

20. Verfahren nach einem der vorstehenden Ansprüche, **dadurch gekennzeichnet, daß** die wässerige Zusammensetzung mindestens einen organischen Korrosionsinhibitor enthält, insbesondere auf Basis von Amin(en), vorzugsweise mindestens ein Alkanolamin, mindestens ein leitfähiges Polymer oder/und mindestens ein Thiol.

21. Verfahren nach einem der vorstehenden Ansprüche, **dadurch gekennzeichnet, daß** die wässerige Zusammensetzung mindestens ein Vernetzungsmittel auf Basis einer basischen Verbindung enthält, vorzugsweise mindestens eines auf Basis von Titan, Hafnium oder/und Zirkonium bzw. auf Basis von Carbonat oder Ammoniumcarbonat.

22. Verfahren nach einem der vorstehenden Ansprüche, **dadurch gekennzeichnet, daß** die wässerige Zusammensetzung frei von anorganischen Säuren oder/und organischen Carbonsäuren ist.

23. Verfahren nach einem der vorstehenden Ansprüche, **dadurch gekennzeichnet, daß** als organisches Lösemittel für die organischen Polymere mindestens ein wassermischbarer oder/und wasserlöslicher Alkohol, ein Glykolether bzw. N-Methylpyrrolidon oder/und Wasser verwendet wird, im Falle der Verwendung eines Lösemittelgemisches insbesondere eine Mischung aus mindestens einem langkettigen Alkohol, wie z.B. Propylenglykol, ein Esteralkohol, ein Glykolether oder/und Butandiol mit Wasser, vorzugsweise jedoch nur Wasser ohne organisches Lösemittel.

24. Verfahren nach einem der vorstehenden Ansprüche, **dadurch gekennzeichnet, daß** der Gehalt an organischem Lösemittel 0,1 bis 10 Gew.-% beträgt.

25. Verfahren nach einem der vorstehenden Ansprüche, **dadurch gekennzeichnet, daß** als Gleitmittel mindestens ein Wachs ausgewählt aus der Gruppe der Paraffine, Polyethylene und Polypropylene verwendet wird, insbesondere ein oxidiertes Wachs.

26. Verfahren nach Anspruch 25, **dadurch gekennzeichnet, daß** der Schmelzpunkt des als Gleitmittel eingesetzten Wachses im Bereich von 40 bis 160°C liegt.

27. Verfahren nach einem der vorstehenden Ansprüche, **dadurch gekennzeichnet, daß** zusätzlich ein leitfähiges Polymer zugesetzt wird.

28. Verfahren nach einem der vorstehenden Ansprüche, **dadurch gekennzeichnet, daß** zusätzlich mindestens ein Photoinitiator zugesetzt wird, um eine Aushärtung durch Bestrahlung mit aktinischer Strahlung zu ermöglichen.

29. Verfahren nach Anspruch 28, **dadurch gekennzeichnet, daß** die Beschichtung teilweise durch aktinische Strahlung und teilweise durch Trocknung und Verfilmen bzw. thermische Vernetzung zur Aushärtung gebracht wird.

30. Verfahren nach einem der vorstehenden Ansprüche, **dadurch gekennzeichnet, daß** die wässerige Zusammensetzung gegebenenfalls jeweils mindestens ein Biozid, einen Entschäumer, oder/und ein Netzmittel enthält.

31. Verfahren nach einem der vorstehenden Ansprüche, **dadurch gekennzeichnet, daß** eine wässerige Zusammensetzung mit einem pH-Wert im Bereich von 0,5 bis 12 eingesetzt wird.

32. Verfahren nach einem der vorstehenden Ansprüche, **dadurch gekennzeichnet, daß** die wässerige Zusammensetzung bei einer Temperatur im Bereich von 5 bis 50 °C auf die metallische Oberfläche aufgebracht wird.

33. Verfahren nach einem der vorstehenden Ansprüche, **dadurch gekennzeichnet, daß** die metallische Oberfläche bei der Applikation der Beschichtung auf Temperaturen im Bereich von 5 bis 120 °C gehalten wird.

34. Verfahren nach einem der vorstehenden Ansprüche, **dadurch gekennzeichnet, daß** die beschichtete metallische Oberfläche bei einer Temperatur im Bereich von 20 bis 400 °C PMT (peak-metal-temperature) getrocknet wird.

35. Verfahren nach einem der vorstehenden Ansprüche, **dadurch gekennzeichnet, daß** die beschichteten Bänder zu einem Coil aufgewickelt werden, ggf. nach einer Abkühlung auf eine Temperatur im Bereich von 40 bis 70 °C.

36. Verfahren nach einem der vorstehenden Ansprüche, **dadurch gekennzeichnet, daß** die wässerige Zusammensetzung durch Aufwalzen, Fluten, Aufrakeln, Spritzen, Sprühen, Streichen oder Tauchen und ggf. durch nachfolgendes Abquetschen mit einer Rolle aufgetragen wird.

37. Verfahren nach einem der vorstehenden Ansprüche, **dadurch gekennzeichnet, daß** der getrocknete und ggf. auch ausgehärtete Film eine Pendelhärte von 30 bis 190 s aufweist, gemessen mit einem Pendelhärteprüfer nach König nach DIN 53157.

38. Verfahren nach einem der vorstehenden Ansprüche, **dadurch gekennzeichnet, daß** der getrocknete und ggf. auch ausgehärtete Film eine derartige Flexibilität aufweist, daß beim Biegen über einen konischen Dorn bei einem Dornbiegetest weitestgehend nach DIN ISO 6860 für einen Dorn von 3.2 mm bis 38 mm Durchmesser - jedoch ohne die Testfläche anzureißen - keine Risse länger als 2 mm entstehen, die bei der anschließenden Benetzung mit Kupfersulfat durch Farbumschlag infolge Kupferabscheidung auf der aufgerissenen metallischen Oberfläche erkennbar werden.

39. Verfahren nach einem der vorstehenden Ansprüche, **dadurch gekennzeichnet, daß** auf den getrockneten und ggf. auch ausgehärteten Film jeweils mindestens eine Beschichtung aus Lack, Polymeren, Farbe, Klebstoff oder/und Klebstoffträger aufgebracht wird.

40. Verfahren nach einem der vorstehenden Ansprüche, **dadurch gekennzeichnet, daß** die beschichteten Metallteile, Bänder oder Bandabschnitte umgeformt, lackiert, mit Polymeren wie z.B. PVC beschichtet, bedruckt, beklebt, heißgelötet, geschweißt oder/und durch Clinchen oder andere Fügetechniken miteinander oder mit anderen Elementen verbunden werden.

41. Wässerige Zusammensetzung zur Vorbehandlung einer metallischen Oberfläche vor einer weiteren Beschichtung oder zur Behandlung jener Oberfläche, die weitgehend oder gänzlich von Chrom(VI)-Verbindungen frei ist, **dadurch gekennzeichnet, daß** die Zusammensetzung neben Wasser
a) mindestens einen organischen Filmbildner, der mindestens ein wasserlösliches oder wasserdispergiertes Polymer mit einer Säurezahl im Bereich von 5 bis 200 enthält, auf der Basis von
Acryl-Polyester-Polyurethan-Mischpolymerisat,
Acryl-Polyester-Polyurethan-Styrol-Mischpolymerisat,
Ethylen-Acryl-Polyester-Polyurethan-Mischpolymerisat,
Ethylen-Acryl-Polyester-Polyurethan-Styrol-Mischpolymerisat,
Ethylen-Acryl-Mischpolymerisat,
Ethylen-Acryl-Styrol-Mischpolymerisat,
Polyesterharzen mit freien Carboxylgruppen kombiniert mit Melamin-Formaldehydharzen,
einem Mischpolymerisat auf der Basis von Acrylat und Styrol,
einem Mischpolymerisat auf der Basis von Styrolbutadien
oder/und
einem Mischpolymerisat von Acrylat und Epoxid bzw. auf der Basis von einem Acryl-modifizierten Carboxylgruppen-haltigen Polyester zusammen mit Melamin-Formaldehyd und Ethylen-Acryl-Mischpolymerisat,
b) mindestens eine anorganische Verbindung in Partikelform mit einem mittleren Partikeldurchmesser gemessen an einem Rasterelektronenmikroskop im Bereich von 0,005 bis zu 0,3 µm Durchmesser,
c) mindestens ein Gleitmittel,
d) mindestens einen langkettigen Alkohol und
e) mindestens einen organischen Korrosionsinhibitor, mindestens ein Silan oder/und Siloxan berechnet als Silan oder/und mindestens ein Vernetzungsmittel insbesondere auf Basis einer basischen Verbindung sowie
f) ggf. mindestens ein organisches Lösemittel enthält.

42. Verwendung der nach dem Verfahren gemäß mindestens einem der vorstehenden Ansprüche 1 bis 40 beschichteten Substrate wie z.B. einem Draht, einem Band oder einem Teil, **dadurch gekennzeichnet, daß** das zu beschichtende Substrat eine Drahtwicklung, ein Drahtgeflecht, ein Stahlband, ein Blech, eine Verkleidung, eine Abschirmung, eine Karosserie oder ein Teil einer Karosserie, ein Teil eines Fahrzeugs, Anhängers, Wohnmobils oder Flugkörpers, eine Abdeckung, ein Gehäuse, eine Lampe, eine Leuchte, ein Ampelelement, ein Möbelstück oder Möbelelement, ein Element eines Haushaltsgeräts, ein Gestell, ein Profil, ein Formteil komplizierter Geometrie, ein Leitplanken-, Heizkörper- oder Zaunelement, eine Stoßstange, ein Teil aus oder mit mindestens einem Rohr oder/und einem Profil, ein Fenster-, Tür- oder Fahrradrahmen oder ein Kleinteil wie z.B. eine Schraube, Mutter, Flansch, Feder oder ein Brillengestell ist.

## Claims

1. A method for coating a metallic surface, in particular of aluminium, iron, copper, magnesium, nickel, titanium, tin, zinc or alloys containing aluminium, iron, copper, magnesium, nickel, titanium, tin or/and zinc, with an aqueous composition, which may be largely or entirely free from chromium(VI) compounds, for pretreatment prior to a further coating or for treatment, wherein the body to be coated - in particular a strip or strip section - is optionally formed after the coating, **characterised in that** the composition contains, in addition to water,
a) at least one organic film-forming agent which contains at least one water-soluble or water-dispersed polymer with an acid value within the range from 5 to 200, based on
acrylic-polyester-polyurethane mixed polymerisate,
acrylic-polyester-polyurethane-styrene mixed polymerisate,
ethylene-acrylic-polyester-polyurethane mixed polymerisate,
ethylene-acrylic-polyester-polyurethane-styrene mixed polymerisate,
ethylene-acrylic mixed polymerisate,
ethylene-acrylic-styrene mixed polymerisate,
polyester resins with free carboxyl groups combined with melamine-formaldehyde resins,
a mixed polymerisate based on acrylate and styrene,
a mixed polymerisate based on styrene-butadiene
or/and
a mixed polymerisate of acrylate and epoxide or based on an acrylic-modified polyester containing carboxyl groups together with melamine formaldehyde and ethylene-acrylic mixed polymerisate,
b) at least one inorganic compound in particle form with a mean particle diameter, measured by a scanning electron microscope, within the range from 0.005 µm to 0.3 µm,
c) at least one lubricant,
d) at least one long-chain alcohol and
e) at least one organic corrosion inhibitor, at least one silane or/and siloxane, reckoned as silane, or/and at least one crosslinking agent, in particular based on a basic compound and also
f) optionally at least one organic solvent,
wherein the clean metallic surface is brought into contact with the aqueous composition and a particle-containing film is formed on the metallic surface, said film being subsequently dried and, optionally in addition, cured,
wherein the dried and optionally also cured film exhibits a layer thickness within the range from 0.01 µm to 10 µm, determined by detaching a defined area of the cured film and weighing it out.

2. Method according to Claim 1, **characterised in that** the organic film-forming agent is present in the form of a solution, dispersion, emulsion, microemulsion or/and suspension.

3. Method according to Claim 1 or 2, **characterised in that** the organic film-forming agent is at least one synthetic resin, in particular a synthetic resin based on acrylate, ethylene, polyester, polyurethane, silicone polyester, epoxide, phenol, styrene, urea formaldehyde, derivatives, copolymers, polymers, mixtures or/and mixed polymerisates thereof.

4. Method according to one of the preceding claims, **characterised in that** the organic film-forming agent is a synthetic-resin mixture or/and a mixed polymerisate which contains a content of synthetic resin based on acrylate, epoxide, ethylene, urea formaldehyde, phenol, polyester, polyurethane, styrene or/and styrene-butadiene, from which, during or after the release of water and other volatile constituents, an organic film is formed.

5. Method according to one of the preceding claims, **characterised in that** the organic film-forming agent contains synthetic resins or/and polymers or derivatives, copolymers, polymers, mixtures or/and mixed polymerisates based on acrylate, epoxide, phenol, polyethylene imine, polyurethane, polyvinyl alcohol, polyvinyl phenol, polyvinyl pyrrolidone or/and polyaspartic acid, in particular copolymers with a phosphorus-containing vinyl compound.

6. Method according to one of the preceding claims, **characterised in that** the molecular weights of the synthetic resins, copolymers, polymers or of the derivatives, mixtures or/and mixed polymerisates thereof have values within the range of at least 1000 u, preferably of at least 5000 u, particularly preferentially from 20,000 u to 200,000 u.

7. Method according to one of the preceding claims, **characterised in that** the pH value of the organic film-forming agent in an aqueous preparation without addition of further compounds lies within the range from 1 to 12.

8. Method according to one of the preceding claims, **characterised in that** the organic film-forming agent contains only water-soluble synthetic resins or/and polymers, in particular those which are stable in solutions with pH values ≤ 5.

9. Method according to one of the preceding claims, **characterised in that** the organic film-forming agent contains synthetic resin or/and polymer that has/have carboxyl groups.

10. Method according to one of the preceding claims, **characterised in that** the acid groups of the synthetic resins are stabilised with ammonia, with amines such as, for example, morpholine, dimethylethanolamine, diethylethanolamine or triethanolamine or/and with alkali-metal compounds such as, for example, sodium hydroxide.

11. Method according to one of the preceding claims, **characterised in that** the aqueous composition contains 0.1 g/l to 1000 g/l of the organic film-forming agent, preferably 2 g/l to 600 g/l.

12. Method according to one of the preceding claims, **characterised in that** the aqueous composition contains at least one partly hydrolysed or entirely hydrolysed silane.

13. Method according to one of the preceding claims, **characterised in that** at least one aminosilane, one epoxysilane, one vinylsilane or/and at least one corresponding siloxane is included.

14. Method according to one of the preceding claims, **characterised in that** the content of at least one silane or/and siloxane, reckoned as silane, in the aqueous composition preferably amounts to 0.1 g/l to 50 g/l.

15. Method according to one of the preceding claims, **characterised in that** by way of inorganic compound in particle form a finely divided powder, a dispersion or a suspension, such as, for example, a carbonate, oxide, silicate or sulfate is added, in particular colloidal or/and amorphous particles.

16. Method according to one of the preceding claims, **characterised in that** use is made of particles with a mean particle size within the range from 8 nm to 150 nm by way of inorganic compound in particle form.

17. Method according to one of the preceding claims, **characterised in that** particles based on at least one compound of aluminium, barium, cerium, calcium, lanthanum, silicon, titanium, yttrium, zinc or/and zirconium are added by way of inorganic compound in particle form.

18. Method according to one of the preceding claims, **characterised in that** particles based on aluminium oxide, barium sulfate, cerium dioxide, silicon dioxide, silicate, titanium oxide, yttrium oxide, zinc oxide or/and zirconium oxide are added by way of inorganic compound in particle form.

19. Method according to one of the preceding claims, **characterised in that** the aqueous composition contains 0.1 g/l to 500 g/l of the at least one inorganic compound in particle form.

20. Method according to one of the preceding claims, **characterised in that** the aqueous composition contains at least one organic corrosion inhibitor, in particular based on amine(s), preferably at least one alkanolamine, at least one conductive polymer or/and at least one thiol.

21. Method according to one of the preceding claims, **characterised in that** the aqueous composition contains at least one crosslinking agent based on a basic compound, preferably at least one based on titanium, hafnium or/and zirconium or based on carbonate or ammonium carbonate.

22. Method according to one of the preceding claims, **characterised in that** the aqueous composition is free from inorganic acids or/and organic carboxylic acids.

23. Method according to one of the preceding claims, **characterised in that** by way of organic solvent for the organic polymers use is made of at least one water-miscible or/and water-soluble alcohol, a glycol ether or N-methylpyrrolidone or/and water, in the case of the use of a solvent mixture in particular a mixture of at least one long-chain alcohol, such as, for example, propylene glycol, an ester alcohol, a glycol ether or/and butanediol with water, but preferably only water without organic solvent.

24. Method according to one of the preceding claims, **characterised in that** the content of organic solvent amounts to 0.1 wt.% to 10 wt.%.

25. Method according to one of the preceding claims, **characterised in that** use is made of at least one wax selected from the group comprising the paraffins, polyethylenes and polypropylenes, in particular an oxidised wax, by way of lubricant.

26. Method according to Claim 25, **characterised in that** the melting-point of the wax employed as lubricant lies within the range from 40 °C to 160 °C.

27. Method according to one of the preceding claims, **characterised in that** in addition a conductive polymer is added.

28. Method according to one of the preceding claims, **characterised in that** in addition at least one photoinitiator is added in order to enable curing by irradiation with actinic radiation.

29. Method according to Claim 28, **characterised in that** the coating is caused to cure partly by actinic radiation and partly by drying and being made into a film or by thermal crosslinking.

30. Method according to one of the preceding claims, **characterised in that** the aqueous composition optionally contains in each instance at least one biocide, one defoamer or/and one wetting agent.

31. Method according to one of the preceding claims, **characterised in that** an aqueous composition is employed with a pH value within the range from 0.5 to 12.

32. Method according to one of the preceding claims, **characterised in that** the aqueous composition is applied onto the metallic surface at a temperature within the range from 5 °C to 50 °C.

33. Method according to one of the preceding claims, **characterised in that** in the course of the application of the coating the metallic surface is maintained at temperatures within the range from 5 °C to 120 °C.

34. Method according to one of the preceding claims, **characterised in that** the coated metallic surface is dried at a temperature within the range from 20 °C to 400 °C PMT (peak metal temperature).

35. Method according to one of the preceding claims, **characterised in that** the coated strips are wound into a coil, optionally after cooling to a temperature within the range from 40 °C to 70 °C.

36. Method according to one of the preceding claims, **characterised in that** the aqueous composition is applied by roller coating, flow coating, blade coating, spattering, spraying, brushing or dipping and optionally by subsequent squeezing off with a roller.

37. Method according to one of the preceding claims, **characterised in that** the dried and optionally also cured film exhibits a pendulum hardness from 30 s to 190 s, measured with a pendulum-hardness tester according to König in accordance with DIN 53157.

38. Method according to one of the preceding claims, **characterised in that** the dried and optionally also cured film exhibits such a flexibility that in the course of bending over a conical mandrel in a mandrel bend test very largely according to DIN ISO 6860 for a mandrel of diameter 3.2 mm to 38 mm - but without making a tear in the test surface - no cracks longer than 2 mm arise which in the course of the subsequent wetting with copper sulfate become recognisable through a change in colour as a consequence of precipitation of copper on the cracked metallic surface.

39. Method according to one of the preceding claims, **characterised in that** in each instance at least one coating consisting of lacquer, polymers, paint, adhesive or/and adhesive backing is applied onto the dried and optionally also cured film.

40. Method according to one of the preceding claims, **characterised in that** the coated metal parts, strips or strip sections are formed, lacquered, coated with polymers, such as PVC for example, imprinted, pasted over, hot-soldered, welded or/and connected to one another or to other elements by clinching or other joining techniques.

41. An aqueous composition for the pretreatment of a metallic surface prior to a further coating or for the treatment of that surface, which is largely or entirely free from chromium(VI) compounds, **characterised in that** the composition contains, in addition to water,
a) at least one organic film-forming agent which contains at least one water-soluble or water-dispersed polymer with an acid value within the range from 5 to 200, based on
acrylic-polyester-polyurethane mixed polymerisate,
acrylic-polyester-polyurethane-styrene mixed polymerisate,
ethylene-acrylic-polyester-polyurethane mixed polymerisate,
ethylene-acrylic-polyester-polyurethane-styrene mixed polymerisate,
ethylene-acrylic mixed polymerisate, ethylene-acrylic-styrene mixed polymerisate, polyester resins with free carboxyl groups combined with melamine-formaldehyde resins,
a mixed polymerisate based on acrylate and styrene,
a mixed polymerisate based on styrene-butadiene
or/and
a mixed polymerisate of acrylate and epoxide or based on an acrylic-modified polyester containing carboxyl groups together with melamine formaldehyde and ethylene-acrylic mixed polymerisate,
b) at least one inorganic compound in particle form with a mean particle diameter, measured by a scanning electron microscope, within the range from 0.005 µm to 0.3 µm,
c) at least one lubricant,
d) at least one long-chain alcohol and
e) at least one organic corrosion inhibitor, at least one silane or/and siloxane, reckoned as silane, or/and at least one crosslinking agent, in particular based on a basic compound and also
f) optionally at least one organic solvent.

42. Use of the substrates coated by the method according to at least one of the preceding Claims 1 to 40, such as, for example, a wire, a strip or a part, **characterised in that** the substrate to be coated is a wire winding, a wire netting, a steel strip, a sheet, a fairing, a screen, a car body or a part of a car body, a part of a vehicle, of a trailer, of a camper or of an aircraft, a cover, a housing, a lamp, a lighting fixture, a traffic-light element, a piece of furniture or a furniture element, an element of a household appliance, a frame, a profile, a shaped part having complicated geometry, a crash-barrier element, a heater element, a fence element, a bumper, a part consisting of or having at least one tube or/and one profile, a window frame, a door frame, a bicycle frame or a small part such as, for example, a screw, a nut, a flange, a spring or a spectacle frame.

## Revendications

1. Procédé pour le revêtement d'une surface métallique, en particulier d'aluminium, de fer, cuivre, magnésium, nickel, titane, étain, zinc ou d'alliages contenant de l'aluminium, du fer, du cuivre, du magnésium, du nickel, du titane, de l'étain et/ou du zinc, avec une composition aqueuse qui est pratiquement ou totalement exempte de composés contenant du chrome-(VI), pour le prétraitement avant un autre revêtement ou pour le traitement dans lequel le corps à revêtir - en particulier un ruban ou un segment de ruban - est éventuellement mis en forme après le revêtement, **caractérisé en ce que** la composition, outre de l'eau, contient
a) au moins un agent filmogène organique contenant au moins un polymère soluble dans l'eau ou dispersé dans l'eau, ayant un indice d'acide dans la plage allant de 5 à 200, à base de
polymère mixte acrylique-polyester-polyuréthanne,
polymère mixte acrylique-polyester-polyuréthanne-styrène,
polymère mixte éthylène-acrylique-polyester-polyuréthanne,
polymère mixte éthylène-acrylique-polyester-polyuréthanne-styrène,
polymère mixte éthylène-acrylique,
polymère mixte éthylène-acrylique-styrène,
résines polyester à groupes carboxy libres, associées à des résines mélamine-formaldéhyde,
d'un polymère mixte à base d'acrylate et de styrène,
d'un polymère mixte à base de styrène-butadiène,
et/ou
d'un polymère mixte d'acrylate et d'époxyde
ou à base d'un polyester contenant des groupes carboxy, à modification acrylique, conjointement avec un polymère mixte mélamine-formaldéhyde et un polymère mixte éthylène-acrylique,
b) au moins un composé inorganique sous forme particulaire ayant un diamètre moyen de particule, mesuré sous un microscope électronique à balayage, dans la plage de 0,005 à 0,3 µm de diamètre,
c) au moins un lubrifiant,
d) au moins un alcool à longue chaîne et
e) au moins un inhibiteur de corrosion, au moins un silane et/ou un siloxane calculé en tant que silane et/ou au moins un agent de réticulation en particulier à base d'un composé basique, ainsi que
f) éventuellement au moins un solvant organique,
la surface métallique propre étant mise en contact avec la composition aqueuse et sur la surface métallique étant formé un film contenant des particules, qui est ensuite séché et éventuellement additionnellement durci et le film séché et éventuellement également durci ayant une épaisseur de couche dans la plage allant de 0,01 à 10 µm, déterminée par détachement d'une surface définie du film durci et pesée.

2. Procédé selon la revendication 1, **caractérisé en ce que** l'agent filmogène organique se présente sous la forme d'une solution, dispersion, émulsion, microémulsion, et/ou suspension.

3. Procédé selon la revendication 1 ou 2, **caractérisé en ce que** l'agent filmogène organique est au moins une résine synthétique, en particulier une résine synthétique à base d'acrylate, d'éthylène, de polyester, de polyuréthanne, de silicone-polyester, d'époxyde, de phénol, de styrène, d'urée-formaldéhyde, de leurs dérivés, copolymères, polymères, mélanges et/ou polymères mixtes.

4. Procédé selon l'une quelconque des revendications précédentes, **caractérisé en ce que** l'agent filmogène organique est un mélange de résines synthétiques et/ou un polymère mixte, qui présente une teneur en résine synthétique à base d'acrylate, d'époxyde, d'éthylène, d'urée-formaldéhyde, de phénol, de polyester, de polyuréthanne, de styrène et/ou de styrène-butadiène, à partir duquel un film organique est formé pendant ou après l'addition d'eau et d'autres composants volatils.

5. Procédé selon l'une quelconque des revendications précédentes, **caractérisé en ce que** l'agent filmogène organique contient des résines synthétiques et/ou des polymères ou dérivés, des copolymères, des polymères, des mélanges et/ou des polymères mixtes à base d'acrylate, d'époxyde, de phénol, de polyéthylène-imine, de polyuréthanne, de poly(alcool vinylique), de polyvinylphénol, de polyvinylpyrrolidone et/ou de poly(acide aspartique), en particulier des copolymères avec un composé vinylique contenant du phosphore.

6. Procédé selon l'une quelconque des revendications précédentes, **caractérisé en ce que** les masses moléculaires des résines synthétiques, copolymères, polymères ou de leurs dérivés, mélanges et/ou polymères mixtes sont dans la plage allant d'au moins 1 000, de préférence d'au moins 5 000, de façon particulièrement préférée de 20 000 à 200 000.

7. Procédé selon l'une quelconque des revendications précédentes, **caractérisé en ce que** le pH de l'agent filmogène organique, dans une préparation aqueuse sans addition d'autres composés, se situe dans l'intervalle allant de 1 à 12.

8. Procédé selon l'une quelconque des revendications précédentes, **caractérisé en ce que** l'agent filmogène organique ne contient que des résines synthétiques hydrosolubles et/ou des polymères hydrosolubles, en particulier ceux qui sont stables dans des solutions à pH ≤ 5.

9. Procédé selon l'une quelconque des revendications précédentes, **caractérisé en ce que** l'agent filmogène organique contient une résine synthétique et/ou un polymère qui comportent des groupes carboxy.

10. Procédé selon l'une quelconque des revendications précédentes, **caractérisé en ce que** les groupes acides des résines synthétiques sont stabilisés avec de l'ammoniac, avec des amines, comme par exemple la morpholine, la diméthyléthanolamine, la diéthyléthanolamine ou la triéthanolamine et/ou avec des composés à base de métaux alcalins, comme par exemple l'hydroxyde de sodium.

11. Procédé selon l'une quelconque des revendications précédentes, **caractérisé en ce que** la composition aqueuse contient de 0,1 à 1 000 g/l, de préférence de 2 à 600 g/l, de l'agent filmogène organique.

12. Procédé selon l'une quelconque des revendications précédentes, **caractérisé en ce que** la composition aqueuse contient au moins un silane partiellement hydrolysé ou totalement hydrolysé.

13. Procédé selon l'une quelconque des revendications précédentes, **caractérisé en ce qu'**au moins un aminosilane, un époxysilane, un vinylsilane et/ou au moins un siloxane correspondant est contenu.

14. Procédé selon l'une quelconque des revendications précédentes, **caractérisé en ce que** la teneur de la composition aqueuse en au moins un silane et/ou siloxane calculé en tant que silane vaut de préférence de 0,1 à 50 g/l.

15. Procédé selon l'une quelconque des revendications précédentes, **caractérisé en ce qu'**en tant que composé inorganique sous forme particulaire on ajoute une poudre finement divisée, une dispersion ou une suspension comme par exemple un carbonate, un oxyde, un silicate ou un sulfate, en particulier des particules colloïdales et/ou amorphes.

16. Procédé selon l'une quelconque des revendications précédentes, **caractérisé en ce qu'**en tant que composé inorganique sous forme particulaire on utilise des particules ayant une taille moyenne de particule dans la plage allant de 8 nm à 150 nm.

17. Procédé selon l'une quelconque des revendications précédentes, **caractérisé en ce qu'**on ajoute en tant que composé inorganique sous forme particulaire des particules à base d'au moins un composé de l'aluminium, du baryum, du cérium, du calcium, du lanthane, du silicium, du titane, de l'yttrium, du zinc et/ou du zirconium.

18. Procédé selon l'une quelconque des revendications précédentes, **caractérisé en ce qu'**on ajoute en tant que composé inorganique sous forme particulaire des particules à base d'oxyde d'aluminium, de sulfate de baryum, de dioxyde de cérium, de dioxyde de silicium, de silicate, d'oxyde de titane, d'oxyde d'yttrium, d'oxyde de zinc et/ou d'oxyde de zirconium.

19. Procédé selon l'une quelconque des revendications précédentes, **caractérisé en ce que** la composition aqueuse contient de 0,5 à 500 g/l dudit au moins un composé inorganique sous forme particulaire.

20. Procédé selon l'une quelconque des revendications précédentes, **caractérisé en ce que** la composition aqueuse contient au moins un inhibiteur organique de corrosion, en particulier à base d'amine(s), de préférence au moins une alcanolamine, au moins un polymère conducteur et/ou au moins un thiol.

21. Procédé selon l'une quelconque des revendications précédentes, **caractérisé en ce que** la composition aqueuse contient au moins un agent de réticulation à base d'un composé basique, de préférence au moins un à base de titane, hafnium et/ou zirconium ou à base de carbonate ou de carbonate d'ammonium.

22. Procédé selon l'une quelconque des revendications précédentes, **caractérisé en ce que** la composition aqueuse est exempte d'acides minéraux et/ou d'acides carboxyliques organiques.

23. Procédé selon l'une quelconque des revendications précédentes, **caractérisé en ce qu'**en tant que solvant organique pour les polymères organiques on utilise au moins un alcool soluble dans l'eau et/ou miscible à l'eau, un éther de glycol ou la N-méthylpyrrolidone et/ou l'eau, dans le cas de l'utilisation d'un mélange de solvants, en particulier un mélange d'au moins un alcool à longue chaîne, comme par exemple le propylèneglycol, un ester-alcool, un éther de glycol et/ou le butanediol, et d'eau, mais de préférence seulement l'eau sans solvant organique.

24. Procédé selon l'une quelconque des revendications précédentes, **caractérisé en ce que** la teneur en solvant organique vaut de 0,1 à 10 % en poids.

25. Procédé selon l'une quelconque des revendications précédentes, **caractérisé en ce qu'**on utilise en tant que lubrifiant au moins une cire choisie dans le groupe des paraffines, polyéthylènes et polypropylènes, en particulier une cire oxydée.

26. Procédé selon la revendication 25, **caractérisé en ce que** le point de fusion de la cire utilisée en tant que lubrifiant se situe dans la plage allant de 40 à 160°C.

27. Procédé selon l'une quelconque des revendications précédentes, **caractérisé en ce qu'**on ajoute encore un polymère conducteur.

28. Procédé selon l'une quelconque des revendications précédentes, **caractérisé en ce qu'**on ajoute encore au moins un photo-amorceur, pour permettre un durcissement par irradiation avec un rayonnement actinique.

29. Procédé selon la revendication 28, **caractérisé en ce que** le revêtement est amené au durcissement en partie au moyen d'un rayonnement actinique et en partie par séchage et formation de film ou réticulation thermique.

30. Procédé selon l'une quelconque des revendications précédentes, **caractérisé en ce que** la composition aqueuse contient éventuellement, respectivement, au moins un biocide, un antimousse et/ou un agent mouillant.

31. Procédé selon l'une quelconque des revendications précédentes, **caractérisé en ce qu'**on utilise une composition aqueuse à un pH dans l'intervalle de 0,5 à 12.

32. Procédé selon l'une quelconque des revendications précédentes, **caractérisé en ce que** la composition aqueuse est appliquée sur la surface métallique à une température dans la plage de 5 à 50 °C.

33. Procédé selon l'une quelconque des revendications précédentes, **caractérisé en ce que** lors de l'application du revêtement la surface métallique est maintenue à une température dans la plage de 5 à 120 °C.

34. Procédé selon l'une quelconque des revendications précédentes, **caractérisé en ce que** la surface métallique revêtue est séchée à une température dans la plage de 20 à 400 °C PMT (*peak-metal-temperature*).

35. Procédé selon l'une quelconque des revendications précédentes, **caractérisé en ce que** les rubans revêtus sont enroulés en un rouleau (*coil*), éventuellement après un refroidissement jusqu'à une température dans la plage de 40 à 70 °C.

36. Procédé selon l'une quelconque des revendications précédentes, **caractérisé en ce que** la composition aqueuse est appliquée par enduction au rouleau, enduction par ruissellement, enduction à la racle, pistolage, pulvérisation, enduction au pinceau ou trempage et éventuellement par expression subséquente avec un rouleau.

37. Procédé selon l'une quelconque des revendications précédentes, **caractérisé en ce que** le film séché et éventuellement également durci présente une dureté au pendule de 30 à 190 s, mesurée à l'aide d'un appareil de mesure de la dureté au pendule selon Kônig conformément à DIN 53157.

38. Procédé selon l'une quelconque des revendications précédentes, **caractérisé en ce que** le film séché et éventuellement également durci présente une flexibilité telle que lors de la flexion sur un mandrin conique, dans un essai de flexion sur mandrin essentiellement selon DIN ISO 6860 pour un mandrin de 3,2 mm à 38 mm de diamètre - mais sans déchirure de la surface d'essai - il n'apparaît pas de craquelures de longueur supérieure à 2 mm, qui sont décelables lors du mouillage subséquent avec du sulfate cuivre, par changement de couleur par suite du dépôt de cuivre sur la surface métallique mise à nu.

39. Procédé selon l'une quelconque des revendications précédentes, **caractérisé en ce qu'**on applique sur le film séché et éventuellement également durci au moins un revêtement de laque, polymères, peinture, adhésif et/ou support d'adhésif.

40. Procédé selon l'une quelconque des revendications précédentes, **caractérisé en ce que** les pièces métalliques revêtues, rubans ou segments de rubans revêtus sont mis en forme, peints, revêtus de polymères comme par exemple le PVC, imprimés, collés, brasés à chaud, soudés et/ou assemblés entre eux ou avec d'autres éléments par rivetage ou d'autres techniques d'assemblage.

41. Composition aqueuse pour le prétraitement d'une surface métallique avant un autre revêtement ou pour le traitement de la surface, qui est pratiquement ou totalement exempte de composés contenant du chrome-(VI), **caractérisée en ce que** la composition, outre de l'eau, contient
a) au moins un agent filmogène organique contenant au moins un polymère soluble dans l'eau ou dispersé dans l'eau, ayant un indice d'acide dans la plage allant de 5 à 200, à base de
polymère mixte acrylique-polyester-polyuréthanne,
polymère mixte acrylique-polyester-polyuréthanne-styrène,
polymère mixte éthylène-acrylique-polyester-polyuréthanne,
polymère mixte éthylène-acrylique-polyester-polyuréthanne-styrène,
polymère mixte éthylène-acrylique,
polymère mixte éthylène-acrylique-styrène,
résines polyester à groupes carboxy libres, associées à des résines mélamine-formaldéhyde,
d'un polymère mixte à base d'acrylate et de styrène,
d'un polymère mixte à base de styrène-butadiène,
et/ou
d'un polymère mixte d'acrylate et d'époxyde
ou à base d'un polyester contenant des groupes carboxy, à modification acrylique, conjointement avec un polymère mixte mélamine-formaldéhyde et un polymère mixte éthylène-acrylique,
b) au moins un composé inorganique sous forme particulaire ayant un diamètre moyen de particule, mesuré sous un microscope électronique à balayage, dans la plage de 0,005 à 0,3 µm de diamètre,
c) au moins un lubrifiant,
d) au moins un alcool à longue chaîne et
e) au moins un inhibiteur de corrosion, au moins un silane et/ou un siloxane calculé en tant que silane et/ou au moins un agent de réticulation en particulier à base d'un composé basique, ainsi que
f) éventuellement au moins un solvant organique.

42. Utilisation des subjectiles revêtus selon le procédé conformément à au moins l'une des revendications précédentes 1 à 40, comme par exemple un fil, un ruban ou une pièce, **caractérisée en ce que** le subjectile à revêtir est une bobine de fil, un treillis de fils, un ruban d'acier, une tôle, un chemisage, un blindage, une carrosserie ou une partie d'une carrosserie, une partie d'un véhicule, d'une remorque, d'une caravane ou d'un engin volant, une couverture, un boîtier, une lampe, un luminaire, un élément de signalisation, une pièce de meuble ou un élément de meuble, un élément d'un appareil ménager, une étagère, un profilé, une pièce moulée de géométrie compliquée, un élément de rail de sécurité, de corps de chauffe ou de clôture, un pare-chocs, une pièce consistant en ou comportant au moins un tube et/ou un profilé, un châssis de fenêtre, de porte ou de bicyclette, ou une petite pièce de montage, comme par exemple une vis, un écrou, un collet, un ressort ou une monture de lunettes.
